(19) Europäisches Patentamt
European Patent Office
Office européen des brevets

(11) EP 2 749 621 B1

(12) # EUROPEAN PATENT SPECIFICATION

(45) Date of publication and mention of the grant of the patent:
**21.02.2018 Bulletin 2018/08**

(21) Application number: **12825627.8**

(22) Date of filing: **10.08.2012**

(51) Int Cl.:
***C09J 175/06*** (2006.01) ***B32B 27/00*** (2006.01)
***C08G 18/42*** (2006.01) ***C09J 11/04*** (2006.01)
***C09J 11/06*** (2006.01) ***C08K 3/34*** (2006.01)

(86) International application number:
**PCT/JP2012/070483**

(87) International publication number:
**WO 2013/027609 (28.02.2013 Gazette 2013/09)**

(54) **RESIN COMPOSITION FOR ADHESIVES CONTAINING PLATE-LIKE INORGANIC COMPOUND, AND ADHESIVE**

HARZZUSAMMENSETZUNG FÜR KLEBSTOFFE MIT PLATTENFÖRMIGER ANORGANISCHER VERBINDUNG UND KLEBSTOFF

COMPOSITION DE RÉSINE POUR ADHÉSIFS CONTENANT UN COMPOSÉ INORGANIQUE EN FORME DE PLAQUE, ET ADHÉSIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.08.2011 JP 2011182558**
**24.11.2011 JP 2011256144**
**21.12.2011 JP 2011279698**

(43) Date of publication of application:
**02.07.2014 Bulletin 2014/27**

(73) Proprietor: **DIC Corporation**
**Tokyo 174-8520 (JP)**

(72) Inventors:
- **SHIMOGUCHI Mutsuhiro**
  **Sakura-shi**
  **Chiba 285-8668 (JP)**
- **NAKASHIMA Michiya**
  **Sakura-shi**
  **Chiba 285-8668 (JP)**
- **OZONO Keiichi**
  **Sakura-shi**
  **Chiba 285-8668 (JP)**
- **NAKAMURA Hidemi**
  **Tokyo 174-8520 (JP)**
- **SAKURAI Hiroko**
  **Sakura-shi**
  **Chiba 285-8668 (JP)**

(74) Representative: **Adam, Holger et al**
**Kraus & Weisert**
**Patentanwälte PartGmbB**
**Thomas-Wimmer-Ring 15**
**80539 München (DE)**

(56) References cited:
**WO-A1-2007/023856** **WO-A1-2011/162160**
**WO-A1-2012/133270** **JP-A- 2000 096 030**
**JP-A- 2001 107 015** **JP-A- 2003 013 032**
**JP-A- 2003 013 032** **JP-A- 2004 010 655**
**JP-A- 2008 156 502** **JP-A- 2009 280 735**
**US-A- 5 527 616**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 749 621 B1

## Description

Technical Field

The present invention relates to a resin composition that can provide a film having a good adhesive strength, a good oxygen-barrier property, and a good light-blocking property, an adhesive obtained by curing the resin composition, the use of the adhesive, and a barrier multilayer film.

Background Art

Composite film materials produced by laminating multiple layers such as various plastic films, metal- or glass-vapor deposited films, and metal foils have been used as foodstuff packaging materials. An example of a method for laminating these plastic films, metal- or glass-vapor deposited films, metal foils, and the like is a technique called "dry lamination" in which an adhesive is applied onto a surface of a material, a solvent is then removed by evaporation and drying, and another material is laminated while heating under pressure. With this dry lamination technique, any type of film can be laminated substantially without limitation to obtain composite films having a performance for any purpose, and thus this technique is widely used for producing foodstuff packaging materials that require a high performance.

The adhesive used is this technique requires a high performance with respect to (1) adhesiveness to plastic films, aluminum-vapor deposited films, alumina-vapor deposited films, silica-vapor deposited films, and aluminum foils, (2) initial adhesiveness for preventing tunneling, (3) a curing rate of the adhesive, (4) a pot life, (5) resistance to the content, (6) boiling and retort resistance, etc. Furthermore, (7) low odor and taste properties that prevent a phenomenon that various impurities derived from the adhesive transfer to the content and adversely affect the odor and taste has been recently regarded as important.

The adhesive used in this technique is mainly a two-liquid reaction-type polyurethane-based adhesive. This adhesive contains, as main components, a polyol component having a hydroxyl group at an end of a polymer and a polyisocyanate component having an isocyanate group, and is cured by forming a urethane bond by a reaction between the hydroxyl group and the isocyanate group. Known specific examples thereof include combinations of a polyisocyanate compound with a polyether polyurethane polyol, or a polyester polyol or polyester polyurethane polyol in which a polyester bond concentration derived from an aliphatic acid is 2 to 4 mg equivalent/g relative to a solid content of the adhesive, or a mixture of two or more of these (PTL 1).

Furthermore, in recent years, the production of environmentally friendly products has been tried, and adhesive manufacturers have intensively developed high-solid-type or non-solvent-type adhesives. It is desired to achieve a good balance between initial adhesiveness, an adhesive strength, good heat resistance and good resistance to the content, and printability, etc.

For packaging materials used for packaging food, drink, and the like, a wide range of functions such as not only the strength, cracking resistance, retort resistance, and heat resistance but also high transparency that allows the content to be checked are required in order to protect the content from various distributions, preservation such as refrigeration, processing such as heat sterilization, etc. On the other hand, in the case where a bag is hermetically sealed by heat sealing, non-oriented polyolefin films that have good thermal processability are essential. However, non-oriented polyolefin films lack many functions necessary for packaging materials. In particular, for the purpose of maintaining the quality of the content, high barrier properties are required. Such barrier packaging materials are usually used in the form of composite flexible films produced by laminating different types of polymer materials.

In the case where a barrier function is provided to a multilayer film, a non-oriented polyolefin film used as an inner layer (on the sealant side) has a poor oxygen-barrier property and it is also difficult to provide a barrier function to the non-oriented polyolefin film by coating or vapor deposition. Therefore, a barrier function is often provided to a film (such as a film composed of a polyester-based resin, e.g., polyethylene terephthalate (hereinafter abbreviated as "PET"), a polyamide resin, or an oriented polyolefin resin) used on the outer layer side.

In the case where a barrier function is provided to the film on the outer layer side by coating, vinylidene chloride, which has high retort resistance and a high oxygen-barrier property, has been often used as a barrier coating material. However, the use of vinylidene chloride causes a problem that, for example, dioxins are generated when the material is incinerated for disposal. In the case where polyvinyl alcohol resins or ethylene-polyvinyl alcohol copolymers are used as barrier coating materials, there may be a problem that oxygen-barrier properties significantly decrease at a high humidity or after a boiling treatment or a retort treatment, though the oxygen-barrier properties are high at a low humidity. Furthermore, films that have, as oxygen-barrier layers, vapor-deposited layers composed of a metal oxide such as silica or alumina are expensive, have poor flexibility, and thus have a problem that the barrier performance is varied by cracks and pinholes.

As for an oxygen-barrier material, for example, PTL 2 describes an oxygen-barrier composite film that uses a thermosetting oxygen-barrier polyurethane resin containing a resin cured product obtained by reacting (A) an active

hydrogen-containing compound with (B) an organic polyisocyanate compound. The resin cured product contains 20% by mass or more of a skeleton structure derived from a meta-xylene diisocyanate. In addition, a proportion of a trifunctional or higher compound out of the compounds (A) and (B) is 7% by mass or more of the total amount of the compounds (A) and (B).

However, the above composition has poor workability because a solvent having a high polarity must be used. For example, in the case where a solvent having a high solubility, such as acetone, is used, since the solvent has a low boiling point and easily incorporates water in the outside air, there may be a problem that the preparation viscosity is easily increased by a reaction between water and an isocyanate.

PTL 3 describes a barrier laminate produced as follows: A thin-film layer containing silicon oxide or aluminum oxide is formed on at least one surface of a polymer film substrate to prepare a coating film having transparency. The surface of the thin-film layer of the coating film is then bonded to a heat-sealable resin film by a dry lamination method with a barrier adhesive therebetween, the barrier adhesive containing at least one particle selected from inorganic silicon oxide or aluminum oxide, a polyester polyol, and an isocyanate compound. However, this laminate has a problem in that the barrier property of the adhesive is not high because the barrier property is exhibited by a combination with a barrier film and the inorganic compound contained in the adhesive has a spherical shape or an irregular shape and has a particle size on the order of nanometers.

PTL 4 describes a first solvent-free aliphatic polyurethane laminate adhesive applied onto at least one layer of a pair of layers adjacent to a laminate including a polyester outer side layer and a polypropylene inner side layer, the adhesive being used for bonding the two adjacent layers of the laminate. The first solvent-free aliphatic polyurethane laminate adhesive contains exfoliated clay platelets that form a functional barrier against the passage of a gas passing through at least one of the sheets. However, PTL 4 dos not describe the expression of a barrier property, and the barrier performance is not clear.

The use of an aluminum vapor-deposited film is assumed to be means for improving a gas-barrier property. Aluminum vapor-deposited films are often used as packages of food, medicines, and aromatic products from the viewpoint of a high gas-barrier property, a high moisture-proof property, a high light-blocking property, a high aroma retention property, etc. However, this form has the following drawbacks: For example, the content is invisible and thus the content cannot be visually checked from the outside. In packaging of retort-packed food or the like, the aluminum vapor-deposited film cannot be heated as it is with a microwave oven. Furthermore, the metal and an organic substance cannot be separated. Thus, this form is contrary to the current social need in terms of recycling and resource conservation.

PTL 5 discloses a laminate for flexible packaging and a process for preparing the same. The laminate for flexible packaging is obtained by joining a plurality of flexible blanks via layers of an adhesive agent, wherein the layers of said adhesive agent are layers of an isocyanate-terminated polyurethane type hot-melt resin that is crosslinked with the moisture, the residual amount of an organic solvent in said laminate is 10 $\mu g/m^2$ or smaller per a unit inner surface, the peeling strength at 25°C is 250 g/15 mm of width or greater, and a peeling strength retentivity at 80°C is 30% or greater of the peeling strength at 25°C.

PTL 6 discloses a two-part curing adhesive composition for laminating comprising a polyester-polyol obtained by reactin a polybasic acid with a polyhydric alcohol as a principal component and a polyisocyanate as a curing agent.

Citation List

Patent Literature

PTL 1: Japanese Unexamined Patent Application Publication No. 2000-290631
PTL 2: Japanese Patent No. 4054972
PTL 3: Japanese Patent No. 3829526
PTL 4: Japanese Patent No. 3906095
PTL 5: US 5,527,616 A
PTL 6: JP 2003 013032 A1


Summary of Invention

Technical Problem

Although materials having adhesive strengths, gas-barrier properties, and light-blocking properties have been desired, in the present situation, materials that satisfy these properties have not been achieved by existing techniques.

Accordingly, an object to be achieved by the present invention is to provide a resin composition for adhesives,

the resin composition mainly containing a resin having a good adhesive strength, a good gas-barrier property, and a good light-blocking property, and an adhesive obtained by applying the resin composition onto a film. Another object to be achieved by the present invention is to provide an adhesive obtained by curing the resin composition, and a barrier multilayer film.

Solution to Problem

The inventors of the present invention achieved the above objects by providing a resin composition for adhesives, the resin composition comprising (A) a resin that has, as functional groups, two or more hydroxyl groups per molecule, (B) an isocyanate compound that has, as functional groups, two or more isocyanate groups per molecule, and (C1) a plate-like inorganic compound that is non-swellable in water,
wherein a main skeleton of the resin (A) has a polyester or polyester polyurethane structure,
wherein a content of the plate-like inorganic compound (C1) is 5 to 50 parts by mass relative to 100 parts by mass of a total mass of the resin (A), the isocyanate compound (B), and the plate-like inorganic compound (C1); and wherein
a ratio of an ortho-oriented aromatic dicarboxylic acid or an anhydride thereof to all polyvalent carboxylic acid components used as monomer components constituting a polyester is 70% to 100% by mass.
Further embodiments are disclosed in the claims.

Advantageous Effects of Invention

According to the present invention, it is possible to provide a resin composition for adhesives, the resin composition mainly contains a polyester resin having a good adhesive strength, a good gas-barrier property, and a good light-blocking property, and an adhesive obtained by curing the composition, and a barrier multilayer film. Description of Embodiments

[(A) Resin that has, as functional groups, two or more hydroxyl groups per molecule]

A resin (A) used in the present invention is a resin that has, as a functional group, two or more hydroxyl group per molecule, and a main skeleton of the resin (A) has a polyester or a polyester polyurethane structure. The resin (A) is not particularly
limited as long as the resin can exhibit an adhesive strength or a gas-barrier property, which is an object achieved by the present invention.
The polyester used in the present invention can be obtained by using a known technique, for example, by a reaction between a polyhydric alcohol and a polyvalent carboxylic acid. The polyester polyurethane can be obtained by using a known technique, for example, by a reaction between a polyester polyol and a diisocyanate. The polyether can be obtained by using a known technique, for example, by polymerizing an oxirane compound such as ethylene oxide, propylene oxide, butylene oxide, or tetrahydrofuran using water or a low-molecular-weight polyol such as ethylene glycol, propylene glycol, trimethylolpropane, or glycerin as an initiator. The polyether polyurethane can be obtained by using a known technique, for example, by a reaction between a polyether and a diisocyanate.

(Polyvalent carboxylic acid)

Specific examples of the polyvalent carboxylic acid component used for synthesizing the resin (A) of the present invention include aliphatic polyvalent carboxylic acids such as succinic acid, adipic acid, azelaic acid, sebacic acid, and dodecane dicarboxylic acid; alicyclic polyvalent carboxylic acids such as 1,3-cyclopentane dicarboxylic acid and 1,4-cyclohexane dicarboxylic acid; and aromatic polyvalent carboxylic acids such as orthophthalic acid, terephthalic acid, isophthalic acid, pyromellitic acid, trimellitic acid, 1,4-naphthalene dicarboxylic acid, 2,5-naphthalene dicarboxylic acid, 2,6-naphthalene dicarboxylic acid, naphthalic acid, biphenyl dicarboxylic acid, 1,2-bis(phenoxy)ethane-p,p'-dicarboxylic acid, anhydrides and ester-forming derivatives of any of these dicarboxylic acids; p-hydroxybenzoic acid, p-(2-hydroxyethoxy)benzoic acid, and ester-forming derivatives of any of these dihydroxy carboxylic acids. These polybasic acids may be used alone or as a mixture of two or more acids. Acid anhydrides of any of these polyvalent carboxylic acids can also be used. Among these, in order to obtain a barrier property, succinic acid, 1,3-cyclopentane dicarboxylic acid, orthophthalic acid, an acid anhydride of orthophthalic acid, and isophthalic acid are preferable. Furthermore, orthophthalic acid and an acid anhydride of orthophthalic acid are more preferable.

(Polyhydric alcohol component)

Specific examples of the polyhydric alcohol used in the present invention include aliphatic diols such as ethylene

glycol, propylene glycol, butylene glycol, neopentyl glycol, cyclohexanedimethanol, 1,5-pentanediol, 3-methyl-1,5-pentanediol, 1,6-hexanediol, methylpentanediol, dimethylbutanediol, butylethylpropanediol, diethylene glycol, triethylene glycol, tetraethylene glycol, dipropylene glycol, and tripropylene glycol; aromatic polyhydric phenols such as hydroquinone, resorcinol, catechol, naphthalene diol, biphenol, bisphenol-A, bisphenol-F, and tetramethylbiphenol; and ethylene oxide extension products and hydrogenated alicyclic compounds of any of these polyhydric alcohols. Among these, ethylene glycol, propylene glycol, butylene glycol, neopentyl glycol, and cyclohexanedimethanol are preferable, and ethylene glycol is more preferable because it is assumed that the smaller the number of carbon atoms between oxygen atoms, the more the molecular chain does not become excessively flexible and oxygen does not easily permeate. A polycondensation reaction between the polyvalent carboxylic acid and the polyhydric alcohol can be performed by a known method.

More specifically, examples of the resin (A) that has two or more hydroxyl groups of the present invention include:

- (A1) a polyester polyol obtained by reacting a carboxylic acid anhydride or a polycarboxylic acid with a polyester polyol that has three or more hydroxyl groups,
- (A2) a polyester polyol that having a polymerizable carbon-carbon double bond,
- (A3) a polyester polyol having a glycerol skeleton,
- (A4) a polyester polyol obtained by polycondensation of an ortho-oriented polyvalent carboxylic acid component and a polyhydric alcohol component, and
- (A5) a polyester polyol having an isocyanuric ring.

The polyester polyols will be described below.

[(A1) Polyester polyol obtained by reacting carboxylic acid anhydride or polycarboxylic acid with polyester polyol that has three or more hydroxyl groups]

The polyester polyol (A1) used in the present invention has at least one carboxyl group and two or more hydroxyl groups and is obtained by reacting a carboxylic acid anhydride or a polyvalent carboxylic acid with (I) a polyester polyol that has three or more hydroxyl groups. The polyester polyol (I) that has three or more hydroxyl groups is obtained by using a trivalent or higher polyvalent carboxylic acid or polyhydric alcohol as part of a polyvalent carboxylic acid or part of a polyhydric alcohol.

Regarding the polyhydric alcohol component and the polyhydric alcohol component of the polyester polyol (A1), the polyester polyol (A1) is preferably obtained by reacting a carboxylic acid anhydride or a polyvalent carboxylic acid with a polyester polyol (I) that has three or more hydroxyl groups, the polyester polyol (I) obtained by using a polyvalent carboxylic acid component containing at least one of orthophthalic acid and an anhydride thereof, and a polyhydric alcohol component containing at least one selected from the group consisting of ethylene glycol, propylene glycol, butylene glycol, neopentyl glycol, and cyclohexanedimethanol. The polyester polyol (A1) has at least one carboxyl group and two or more hydroxyl groups.

(Orthophthalic acid and anhydride thereof)

Orthophthalic acid and an anhydride thereof have asymmetric skeleton structures. Accordingly, it is assumed that the rotation of a molecular chain of the resulting polyester is suppressed, and thus a good oxygen-barrier property is obtained. It is also assumed that, due to this asymmetric structure, the resulting polyester becomes amorphous, sufficient adhesiveness to a substrate is provided, and good adhesive strength and a good oxygen-barrier property are obtained. Furthermore, orthophthalic acid and an anhydride thereof have a feature of good handleability because they also have a high solvent solubility, which is an essential property when the resulting polyester is used as a dry laminate adhesive.

(Polyvalent carboxylic acid: other components)

In synthesizing the polyester polyol (I) that has three or more hydroxyl groups, in the case where a branched structure is introduced by a polyvalent carboxylic acid component, it is necessary that a trivalent or higher carboxylic acid be partly contained. Examples of the compound include trimellitic acid and an anhydride thereof, and pyromellitic acid and an anhydride thereof. In order to prevent gelation during the synthesis, the trivalent or higher polyvalent carboxylic acid is preferably a trivalent carboxylic acid.

Besides the above component, other polyvalent carboxylic acid components may be copolymerized in synthesizing the polyester polyol (I) of the present invention as long as the advantages of the present invention are not impaired. Specific examples thereof include aliphatic polyvalent carboxylic acids such as succinic acid, adipic acid, azelaic acid,

sebacic acid, and dodecane dicarboxylic acid; unsaturated bond-containing polyvalent carboxylic acids such as maleic anhydride, maleic acid, and fumaric acid; alicyclic polyvalent carboxylic acids such as 1,3-cyclopentane dicarboxylic acid and 1,4-cyclohexane dicarboxylic acid; and aromatic polyvalent carboxylic acids such as terephthalic acid, isophthalic acid, pyromellitic acid, trimellitic acid, 1,4-naphtalene dicarboxylic acid, 2,5-naphthalene dicarboxylic acid, 2,6-naphthalene dicarboxylic acid, naphthalic acid, biphenyl dicarboxylic acid, 1,2-bis(phenoxy)ethane-p,p'-dicarboxylic acid, anhydrides and ester-forming derivatives of any of these dicarboxylic acids; p-hydroxybenzoic acid, p-(2-hydroxyethoxy)benzoic acid, and ester-forming derivatives of any of these dihydroxy carboxylic acids. These polybasic acids may be used alone or as a mixture of two or more acids. Among these, succinic acid, 1,3-cyclopentane dicarboxylic acid, and isophthalic acid are preferable.

(Polyhydric alcohol component)

A polyhydric alcohol used in the present invention preferably contains at least one selected from the group consisting of ethylene glycol, propylene glycol, butylene glycol, neopentyl glycol, and cyclohexanedimethanol. Among these, ethylene glycol is most preferably used because it is assumed that the smaller the number of carbon atoms between oxygen atoms, the more the molecular chain does not become excessively flexible and oxygen does not easily permeate.

(Polyhydric alcohol: other components)

In synthesizing the polyester polyol (I) that has three or more hydroxyl groups, in the case where a branched structure is introduced by a polyhydric alcohol component, it is necessary that a trihydric or higher polyhydric alcohol be partly contained. Examples of the compound include glycerin, trimethylolpropane, trimethylolethane, tris(2-hydroxyethyl)isocyanurate, 1,2,4-butanetriol, pentaerythritol, and dipentaerythritol. In order to prevent gelation during the synthesis, the trihydric or higher polyhydric alcohol is preferably a trihydric alcohol.

In the present invention, besides the above component, other polyvalent carboxylic acid components may be copolymerized with the polyhydric alcohol component as long as the advantages of the present invention are not impaired. Specific examples thereof include aliphatic diols such as 1,5-pentanediol, 3-methyl-1,5-pentanediol, 1,6-hexanediol, methylpentanediol, dimethylbutanediol, butylethylpropanediol, diethylene glycol, triethylene glycol, tetraethylene glycol, dipropylene glycol, and tripropylene glycol; aromatic polyhydric phenols such as hydroquinone, resorcinol, catechol, naphthalene diol, biphenol, bisphenol-A, bisphenol-F, and tetramethylbiphenol; and ethylene oxide extension products and hydrogenated alicyclic compounds of any of these polyhydric alcohols.

Next, the reaction between the polyester polyol (I) of the present invention and a carboxylic acid anhydride or a polyvalent carboxylic acid is conducted as follows.

That is, the polyester polyol (A1) can be obtained by reacting a polyvalent carboxylic acid or an acid anhydride thereof with a hydroxyl group of the polyester polyol (I). Regarding the ratio of the polyester polyol (I) to the polyvalent carboxylic acid, the polyvalent carboxylic acid is preferably allowed to react with 1/3 or less of the hydroxyl groups of the polyester polyol (I) because the resin (A) obtained after the reaction needs to have two or more hydroxyl groups. The carboxylic acid anhydride or the polyvalent carboxylic acid used in this reaction is not limited. Considering gelation at the time of the reaction between the polyvalent carboxylic acid and the polyester polyol (I), a divalent or trivalent carboxylic acid anhydride is preferably used. Examples of the divalent carboxylic acid anhydride that can be used include succinic anhydride, maleic anhydride, 1,2-cyclohexane dicarboxylic anhydride, 4-cyclohexene-1,2-dicarboxylic anhydride, 5-norbornene-2,3-dicarboxylic anhydride, phthalic anhydride, and 2,3-naphthalene dicarboxylic anhydride. An example of the trivalent carboxylic acid anhydride that can be used is trimellitic anhydride.

The polyester polyol (A1) preferably has a hydroxyl value of 20 to 250 and an acid value of 20 to 200. The hydroxyl value can be measured by the method for measuring a hydroxyl value described in JIS-K0070. The acid value can be measured by the method for measuring an acid value described in JIS-K0070. When the hydroxyl value is smaller than 20 mg KOH/g, the molecular weight is excessively high and thus the viscosity is increased, and satisfactory coating suitability is not obtained. On the other hand, when the hydroxyl value exceeds 250 mg KOH/g, the molecular weight is excessively low and thus the cross-linking density of the resulting cured coating film becomes excessively high, and a satisfactory adhesive strength is not obtained. When the acid value is smaller than 20 mg KOH/g, the interaction between molecules becomes small, and a satisfactory oxygen-barrier property and a satisfactory initial cohesive force are not obtained. On the other hand, when the acid value exceeds 200 mg KOH/g, a reaction between the resin (A) and the isocyanate compound (B) excessively rapidly proceeds and satisfactory coating suitability is not obtained.

[(A2) Polyester polyol having polymerizable carbon-carbon double bond]

The polyester polyol (A2) of the present invention is a polyester polyol having a polymerizable carbon-carbon

double bond in its molecule.

The polyester polyol (A2) used in the present invention is obtained by a reaction between a polyvalent carboxylic acid and a polyhydric alcohol. A polymerizable carbon-carbon double bond can be introduced in the molecule of the polyester polyol (A2) by using a component having a polymerizable carbon-carbon double bond as a component of the polyvalent carboxylic acid or the polyhydric alcohol.

(Polyvalent carboxylic acid)

Specific examples of the polyvalent carboxylic acid component used for synthesizing the polyester polyol (A2) of the present invention include aliphatic polyvalent carboxylic acids such as succinic acid, adipic acid, azelaic acid, sebacic acid, and dodecane dicarboxylic acid; alicyclic polyvalent carboxylic acids such as 1,3-cyclopentane dicarboxylic acid and 1,4-cyclohexane dicarboxylic acid; and aromatic polyvalent carboxylic acids such as orthophthalic acid, terephthalic acid, isophthalic acid, pyromellitic acid, trimellitic acid, 1,4-naphthalene dicarboxylic acid, 2,5-naphthalene dicarboxylic acid, 2,6-naphthalene dicarboxylic acid, naphthalic acid, biphenyl dicarboxylic acid, 1,2-bis(phenoxy)ethane-p,p'-dicarboxylic acid, anhydrides and ester-forming derivatives of any of these dicarboxylic acids; p-hydroxybenzoic acid, p-(2-hydroxyethoxy)benzoic acid, and ester-forming derivatives of any of these dihydroxy carboxylic acids. These polybasic acids may be used alone or as a mixture of two or more acids. Acid anhydrides of any of these polyvalent carboxylic acids can also be used. Among these, in order to obtain a barrier property, succinic acid, 1,3-cyclopentane dicarboxylic acid, orthophthalic acid, an acid anhydride of orthophthalic acid, and isophthalic acid are preferable. Furthermore, orthophthalic acid and an acid anhydride of orthophthalic acid are more preferable.

(Polyvalent carboxylic acid having polymerizable carbon-carbon double bond)

Examples of the polyvalent carboxylic acid having a polymerizable carbon-carbon double bond among polyvalent carboxylic acids include maleic anhydride, maleic acid, fumaric acid, 4-cyclohexene-1,2-dicarboxylic acid and an acid anhydride thereof, and 3-methyl-4-cyclohexene-1,2-dicarboxylic acid and an acid anhydride thereof. Among these, maleic anhydride, maleic acid, and fumaric acid are preferable because it is assumed that the smaller the number of carbon atoms, the more the molecular chain does not become excessively flexible and oxygen does not easily permeate.

(Polyhydric alcohol component)

Specific examples of the polyhydric alcohol used in the present invention include aliphatic diols such as ethylene glycol, propylene glycol, butylene glycol, neopentyl glycol, cyclohexanedimethanol, 1,5-pentanediol, 3-methyl-1,5-pentanediol, 1,6-hexanediol, methylpentanediol, dimethylbutanediol, butylethylpropanediol, diethylene glycol, triethylene glycol, tetraethylene glycol, dipropylene glycol, and tripropylene glycol; aromatic polyhydric phenols such as hydroquinone, resorcinol, catechol, naphthalene diol, biphenol, bisphenol-A, bisphenol-F, and tetramethylbiphenol; and ethylene oxide extension products and hydrogenated alicyclic compounds of any of these polyhydric alcohols. Among these, ethylene glycol, propylene glycol, butylene glycol, neopentyl glycol, and cyclohexanedimethanol are preferable, and ethylene glycol is more preferable because it is assumed that the smaller the number of carbon atoms between oxygen atoms, the more the molecular chain does not become excessively flexible and oxygen does not easily permeate.

(Polyhydric alcohol having polymerizable carbon-carbon double bond)

An example of the polyhydric alcohol having a polymerizable carbon-carbon double bond among polyhydric alcohols is 2-butene-1,4-diol.

In the polyester polyol (A2), a polymerizable double bond is introduced in the polyester polyol (A2) by using a polyvalent carboxylic acid or polyhydric alcohol having a polymerizable carbon-carbon double bond. Alternatively, a reaction between a polyester polyol having a hydroxyl group and a carboxylic acid or carboxylic acid anhydride having a polymerizable double bond may be performed. In this case, a carboxylic acid having a polymerizable double bond, such as maleic acid, maleic anhydride, or fumaric acid, or an unsaturated fatty acid, such as oleic acid or sorbic acid, can be used as the carboxylic acid. In this case, the polyester polyol is preferably a polyester polyol having two or more hydroxyl groups. Considering the molecular extension caused by cross-linking with an isocyanate compound, the polyester polyol more preferably has three or more hydroxyl group. When the polyester polyol has one or two hydroxyl groups, the number of hydroxyl groups of the polyester polyol (A2) obtained by reacting the polyester polyol with a carboxylic acid having a polymerizable double bond becomes 0 or 1 and the molecular extension caused by a reaction with the isocyanate compound (B) does not easily occur. Consequently, it becomes difficult to obtain properties such as a laminate strength, a sealing strength, and heat resistance of an adhesive.

The polyester polyol (A2) preferably has a hydroxyl value of 20 to 250 mg KOH/g and an acid value of 0 to 100

mg KOH/g. The hydroxyl value can be measured by the method for measuring a hydroxyl value described in JIS-K0070. The acid value can be measured by the method for measuring an acid value described in JIS-K0070. When the hydroxyl value is smaller than 20 mg KOH/g, the molecular weight is excessively high and thus the viscosity is increased, and satisfactory coating suitability is not obtained. On the other hand, when the hydroxyl value exceeds 250 mg KOH/g, the molecular weight is excessively low and thus the cross-linking density of the resulting cured coating film becomes excessively high, and a satisfactory adhesive strength is not obtained.

The content of the monomer component having a polymerizable carbon-carbon double bond is 5 to 60 parts by mass relative to 100 parts by mass of all monomer components constituting the polyester polyol (A2).

A content of the monomer component having a polymerizable carbon-carbon double bond lower than the above range is not preferable because the number of cross-slinking points between polymerizable double bonds is decreased and a barrier property is difficult to obtain. A content of the monomer component having a polymerizable carbon-carbon double bond higher than the above range is not preferable because the number of cross-linking points is increased, thereby significantly decreasing flexibility of the resulting cured coating film, and the laminate strength is difficult to obtain.

Note that, in the present application, the content of the monomer component having a polymerizable carbon-carbon double bond (ratio of double-bond component) in the polyester polyol (A2) is calculated by using a formula (a).

[Math. 1]

Ratio of double-bond component = mass of double-bond component (monomer)/mass of all components (monomers) × 100 (a)

Here, the term "monomers" above refers to the polyvalent carboxylic acid and the polyhydric alcohol.

The polyester polyol (A2) of the present invention may be a drying oil or a semi-drying oil. Examples of the drying oil and the semi-drying oil include known drying oils and semi-drying oils that have a carbon-carbon double bond.

[(A3) Polyester polyol having glycerol skeleton]

The polyester polyol (A3) of the present invention is a polyester polyol having a glycerol skeleton represented by a general formula (1).

[Chem. 1]

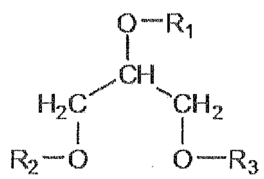

(1)

(In the formula (1), $R_1$ to $R_3$ each independently represent a hydrogen atom or a group represented by a general formula (2) :

[Chem. 2]

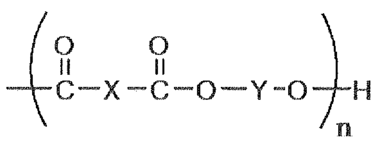

(2)

(in the formula (2), n represents an integer of 1 to 5, X represents an arylene group which is selected from the group consisting of a 1,2-phenylene group, a 1,2-naphthalene group, a 2,3-naphthalene group, a 2,3-anthraquinonediyl group, and a 2,3-anthracenediyl group and which may have a substituent, and Y represents an alkylene group having 2 to 6 carbon atoms) where at least one of $R_1$ to $R_3$ represents a group represented by the general formula (2).)

In the general formula (1), it is necessary that at least one of $R_1$, $R_2$, and $R_3$ be a group represented by the

general formula (2). In particular, all of $R_1$, $R_2$, and $R_3$ are preferably groups represented by the general formula (2).

The polyester polyol (A3) may be a mixture of two or more compounds selected from a compound in which one of $R_1$, $R_2$, and $R_3$ is a group represented by the general formula (2), a compound in which two of $R_1$, $R_2$, and $R_3$ are groups represented by the general formula (2), and a compound in which all of $R_1$, $R_2$, and $R_3$ are groups represented by the general formula (2).

X represents an arylene group which is selected from the group consisting of a 1,2-phenylene group, a 1,2-naphthylene group, a 2,3-naphthalene group, a 2,3-anthraquinonediyl group, and a 2,3-anthracenediyl group and which may have a substituent. When X is substituted with a substituent, X may be substituted with one or a plurality of substituents. The substituent is bonded to any carbon atom in X, the carbon atom being different from a free radical. Examples of the substituent include a chloro group, a bromo group, a methyl group, an ethyl group, an i-propyl group, a hydroxyl group, a methoxy group, an ethoxy group, a phenoxy group, a methylthio group, a phenylthio group, a cyano group, a nitro group, an amino group, a phthalimide group, a carboxyl group, a carbamoyl group, an N-ethylcarbamoyl group, a phenyl group, and a naphthyl group.

In the general formula (2), Y represents an alkylene group having 2 to 6 carbon atoms, such as an ethylene group, a propylene group, a butylene group, a neopentylene group, a 1,5-pentylene group, a 3-methyl-1,5-pentylene group, a 1,6-hexylene group, a methylpentylene group, and a dimethylbutylene group. Among these, Y is preferably a propylene group or an ethylene group, and most preferably an ethylene group.

The polyester resin compound having a glycerol skeleton represented by the general formula (1) is obtained by allowing, as essential components, glycerol, an aromatic polyvalent carboxylic acid having carboxylic groups at the ortho positions or an anhydride thereof, and a polyhydric alcohol component to react with each other.

Examples of the aromatic polyvalent carboxylic acid having carboxylic groups at the ortho positions and an anhydride thereof include orthophthalic acid and an anhydride thereof, naphthalene-2,3-dicarboxylic acid and an anhydride thereof, naphthalene-1,2-dicarboxylic acid and an anhydride thereof, anthraquinone-2,3-dicarboxylic acid and an anhydride thereof, and 2,3-anthracene-carboxylic acid and an anhydride thereof. These compounds may have a substituent at any carbon atom of an aromatic ring. Examples of the substituent include a chloro group, a bromo group, a methyl group, an ethyl group, an i-propyl group, a hydroxyl group, a methoxy group, an ethoxy group, a phenoxy group, a methylthio group, a phenylthio group, a cyano group, a nitro group, an amino group, a phthalimide group, a carboxyl group, a carbamoyl group, an N-ethylcarbamoyl group, a phenyl group, and a naphthyl group.

Examples of the polyhydric alcohol component include alkylene diols having 2 to 6 carbon atoms. Examples of the diol include ethylene glycol, propylene glycol, butylene glycol, neopentyl glycol, 1,5-pentanediol, 3-methyl-1,5-pentanediol, 1,6-hexanediol, methylpentanediol, and dimethylbutanediol.

In the present application, the content of the glycerol skeleton is determined by calculating, using a formula (b), the content of a residue ($C_3H_5O_3$ = 89.07) excluding $R_1$ to $R_3$ in the general formula (1) relative to the mass of the total solid content of the organic resin composition for oxygen-barrier adhesives of the present application.

[Math. 2]

{[(The number of moles of glycerol skeleton contained per molecule of P × 89.07/number-average molecular weight per molecule of P)] × weight of P used/total weight of solid content of organic resin composition for oxygen-barrier adhesives} × 100 (b)

P: Polyester polyol (A3) having glycerol skeleton

Preferably, in order to exhibit a high barrier property, the organic resin composition for oxygen-barrier adhesives contains 5% by mass or more of a glycerol residue.

(Method for calculating mass of solid content of organic resin composition for oxygen-barrier adhesives)

The mass of a total solid content of an organic resin composition for oxygen-barrier adhesives is defined as a mass calculated by subtracting the mass of a diluting solvent, the mass of a volatile component contained in a curing agent, and the mass of an inorganic component from the mass of the resin composition for oxygen-barrier adhesives in terms of parts by mass.

An aromatic polyvalent carboxylic acid having acyl groups at the ortho positions or an anhydride thereof, which is a raw material of the polyester component, has an asymmetric skeleton structure. Accordingly, it is assumed that the rotation of a molecular chain of the resulting polyester is suppressed, and thus a good gas-barrier property is obtained. It is also assumed that crystallinity, which decreases the adhesiveness to a substrate, is low due to the asymmetric structure, and thus a good gas-barrier property is obtained while exhibiting high solubility in solvents such as ethyl acetate and methyl ethyl ketone.

(Polyhydric alcohol)

The polyester polyol (A3) used in the present invention may be obtained by copolymerizing, as a polyhydric alcohol, a polyhydric alcohol component other than alkylene diols having 2 to 6 carbon atoms as long as the advantages of the present invention are not impaired. Specific examples thereof include aliphatic polyhydric alcohols such as glycerol, erythritol, pentaerythritol, dipentaerythritol, diethylene glycol, triethylene glycol, tetraethylene glycol, dipropylene glycol, tripropylene glycol, tetraethylene glycol, and tripropylene glycol; alicyclic polyhydric alcohols such as cyclohexanedimethanol and tricyclodecane dimethanol; aromatic polyhydric phenols such as hydroquinone, resorcinol, catechol, naphthalene diol, biphenol, bisphenol-A, bisphenol-F, and tetramethylbiphenol; and ethylene oxide extension products and hydrogenated alicyclic compounds of any of these polyhydric alcohols.

(Polyvalent carboxylic acid)

The polyester polyol (A3) of the present invention is obtained by essentially using, as a polyvalent carboxylic acid component, an aromatic polyvalent carboxylic acid having carboxylic groups at the ortho positions or an anhydride thereof. However, other polyvalent carboxylic acid components may be copolymerized as long as the advantages of the present invention are not impaired. Specific examples thereof include aliphatic polyvalent carboxylic acids such as succinic acid, adipic acid, azelaic acid, sebacic acid, and dodecane dicarboxylic acid; unsaturated bond-containing polyvalent carboxylic acids such as maleic anhydride, maleic acid, and fumaric acid; alicyclic polyvalent carboxylic acids such as 1,3-cyclopentane dicarboxylic acid and 1,4-cyclohexane dicarboxylic acid; and aromatic polyvalent carboxylic acids such as terephthalic acid, isophthalic acid, pyromellitic acid, trimellitic acid, 1,4-naphthalene dicarboxylic acid, 2,5-naphtalene dicarboxylic acid, 2,6-naphthalene dicarboxylic acid, naphthalic acid, biphenyl dicarboxylic acid, diphenic acid and an anhydride thereof, 1,2-bis(phenoxy)ethane-p,p'-dicarboxylic acid, anhydrides and ester-forming derivatives of any of these dicarboxylic acids; p-hydroxybenzoic acid, p-(2-hydroxyethoxy)benzoic acid, and ester-forming derivatives of any of these dihydroxy carboxylic acids. These polybasic acids may be used alone or as a mixture of two or more acids.

Among these, succinic acid, 1,3-cyclopentane dicarboxylic acid, isophthalic acid, 2,6-naphthalene dicarboxylic acid, 1,8-naphthalic acid, and diphenic acid are preferable.

[(A4) Polyester polyol obtained by polycondensation of ortho-oriented polyvalent carboxylic acid component and polyhydric alcohol component]

The polyester polyol (A4) used in the present invention is obtained by using a polyvalent carboxylic acid component containing at least one of orthophthalic acid and an anhydride thereof, and a polyhydric alcohol component containing at least one selected from the group consisting of ethylene glycol, propylene glycol, butylene glycol, neopentyl glycol, and cyclohexanedimethanol. In particular, the polyester polyol (A4) is preferably a polyester polyol having a ratio of the orthophthalic acid and anhydride thereof used to all polyvalent carboxylic acid components of 70% to 100% by mass.

(Polyvalent carboxylic acid: other components)

The polyester polyol (A4) of the present invention is obtained by essentially using, as a polyvalent carboxylic acid component, the orthophthalic acid and anhydride thereof. However, other polyvalent carboxylic acid components may be copolymerized as long as the advantages of the present invention are not impaired. Specific examples thereof include aliphatic polyvalent carboxylic acids such as succinic acid, adipic acid, azelaic acid, sebacic acid, and dodecane dicarboxylic acid; unsaturated bond-containing polyvalent carboxylic acids such as maleic anhydride, maleic acid, and fumaric acid; alicyclic polyvalent carboxylic acids such as 1,3-cyclopentane dicarboxylic acid and 1,4-cyclohexane dicarboxylic acid; and aromatic polyvalent carboxylic acids such as terephthalic acid, isophthalic acid, pyromellitic acid, trimellitic acid, 1,4-naphtalene dicarboxylic acid, 2,5-naphthalene dicarboxylic acid, 2,6-naphthalene dicarboxylic acid, naphthalic acid, biphenyl dicarboxylic acid, 1,2-bis(phenoxy)ethane-p,p'-dicarboxylic acid, anhydrides and ester-forming derivatives of any of these dicarboxylic acids; p-hydroxybenzoic acid, p- (2-hydroxyethoxy)benzoic acid, and ester-forming derivatives of any of these dihydroxy carboxylic acids. These polybasic acids may be used alone or as a mixture of two or more acids. Among these, succinic acid, 1,3-cyclopentane dicarboxylic acid, and isophthalic acid are preferable.

Examples of the polyhydric alcohol component and other components include those described above.

[(A5) Polyester polyol having isocyanuric ring]

The resin (A) of the present invention further preferably contains a polyester polyol (A5) having an isocyanuric ring represented by a general formula (3) below.

[Chem. 3]

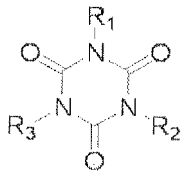

(3)

(In the general formula (3), $R_1$ to $R_3$ each independently represent $-(CH_2)_{n1}-OH$ (where n1 represents an integer of 2 to 4) or a group represented by a general formula (4):

[Chem. 4]

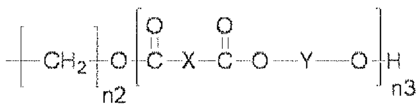

(4)

(in the general formula (4), n2 represents an integer of 2 to 4, n3 represents an integer of 1 to 5, X represents an arylene group which is selected from the group consisting of a 1,2-phenylene group, a 1,2-naphthylene group, a 2,3-naphthylene group, a 2,3-anthraquinonediyl group, and a 2, 3-anthracenediyl group and which may have a substituent, and Y represents an alkylene group having 2 to 6 carbon atoms) where at least one of $R_1$, $R_2$, and $R_3$ is a group represented by the general formula (4).)

In the general formula (3), the alkylene group represented by $-(CH_2)_{n1}-$ may be a straight-chain group or a branched group. In particular, n1 is preferably 2 or 3, and most preferably 2.

In the general formula (4), n2 represents an integer of 2 to 4 and n3 represents an integer of 1 to 5.

X represents an arylene group which is selected from the group consisting of a 1,2-phenylene group, a 1,2-naphthylene group, a 2,3-naphthylene group, a 2,3-anthraquinonediyl group, and a 2,3-anthracenediyl group and which may have a substituent.

When X is substituted with a substituent, X may be substituted with one or a plurality of substituents. The substituent is bonded to any carbon atom in X, the carbon atom being different from a free radical. Examples of the substituent include a chloro group, a bromo group, a methyl group, an ethyl group, an i-propyl group, a hydroxyl group, a methoxy group, an ethoxy group, a phenoxy group, a methylthio group, a phenylthio group, a cyano group, a nitro group, an amino group, a phthalimide group, a carboxyl group, a carbamoyl group, an N-ethylcarbamoyl group, a phenyl group, and a naphthyl group.

Among these, preferable examples of the substituent of X include a hydroxyl group, a cyano group, a nitro group, an amino group, a phthalimide group, a carbamoyl group, an N-ethylcarbamoyl group, and a phenyl group. A hydroxyl group, a phenoxy group, a cyano group, a nitro group, a phthalimide group, and a phenyl group are most preferable.

In the general formula (4), Y represents an alkylene group having 2 to 6 carbon atoms, such as an ethylene group, a propylene group, a butylene group, a neopentylene group, a 1,5-pentylene group, a 3-methyl-1,5-pentylene group, a 1,6-hexylene group, a methylpentylene group, and a dimethylbutylene group. Among these, Y is preferably a propylene group or an ethylene group, and most preferably an ethylene group.

In the general formula (3), at least one of $R_1$, $R_2$, and $R_3$ is a group represented by the general formula (4). In particular, all of $R_1$, $R_2$, and $R_3$ are preferably groups represented by the general formula (4).

The polyester polyol (A5) may be a mixture of two or more compounds selected from a compound in which one of $R_1$, $R_2$, and $R_3$ is a group represented by the general formula. (4), a compound in which two of $R_1$, $R_2$, and $R_3$ are groups represented by the general formula (4), and a compound in which all of $R_1$, $R_2$, and $R_3$ are groups represented by the general formula (4).

The polyester polyol (A5) having an isocyanuric ring represented by the general formula (3) is obtained by

allowing, as essential components, a triol having an isocyanuric ring, an aromatic polyvalent carboxylic acid having carboxylic groups at the ortho positions or an anhydride thereof, and a polyhydric alcohol component to react with each other.

Examples of the triol having an isocyanuric ring include alkylene oxide adducts of isocyanuric acid such as 1,3,5-tris(2-hydroxyethyl)isocyanuric acid and 1,3,5-tris(2-hydroxypropyl)isocyanuric acid.

Examples of the aromatic polyvalent carboxylic acid having carboxylic groups at the ortho positions and an anhydride thereof include orthophthalic acid and an anhydride thereof, naphthalene-2,3-dicarboxylic acid and an anhydride thereof, naphthalene-1,2-dicarboxylic acid and an anhydride thereof, anthraquinone-2,3-dicarboxylic acid and an anhydride thereof, and 2,3-anthracene-carboxylic acid and an anhydride thereof. These compounds may have a substituent at any carbon atom of an aromatic ring.

Examples of the substituent include a chloro group, a bromo group, a methyl group, an ethyl group, an i-propyl group, a hydroxy group, a methoxy group, an ethoxy group, a phenoxy group, a methylthio group, a phenylthio group, a cyano group, a nitro group, an amino group, a phthalimide group, a carboxyl group, a carbamoyl group, an N-ethylcarbamoyl group, a phenyl group, and a naphthyl group.

Examples of the polyhydric alcohol component include alkylene diols having 2 to 6 carbon atoms. Examples of the diol include ethylene glycol, propylene glycol, butylene glycol, neopentyl glycol, 1,5-pentanediol, 3-methyl-1,5-pentanediol, 1,6-hexanediol, methylpentanediol, and dimethylbutanediol.

In particular, a polyester polyol compound having an isocyanuric ring and obtained by using 1,3,5-tris(2-hydroxyethyl)isocyanuric acid or 1,3,5-tris(2-hydroxypropyl)isocyanuric acid as a triol compound having an isocyanuric ring, orthophthalic anhydride as an aromatic polyvalent carboxylic acid having carboxylic groups at the ortho positions or an anhydride thereof, and ethylene glycol as a polyhydric alcohol is preferable because the polyester polyol compound has particularly good oxygen-barrier property and good adhesiveness.

The isocyanuric ring has a high polarity and is trifunctional. Accordingly, the polarity of the entire system can be made high, and the cross-linking density can be increased. From this viewpoint, the isocyanuric ring is preferably contained in an amount of 5% by mass or more relative to the total solid content of the adhesive resin.

The reason why the adhesive of the present invention having an isocyanuric ring can reliably exhibit the oxygen-barrier property and dry laminate adhesiveness is assumed as follows.

The isocyanuric ring has a high polarity and does not form a hydrogen bond. A generally known method for increasing adhesiveness is a method in which a highly polar functional group such as a hydroxyl group, a urethane bond, an ureido bond, or an amide bond is incorporated. However, resins having these bonds easily form an intermolecular hydrogen bond, and thus the solubility in solvents such as ethyl acetate and 2-butanone, which are often used in dry laminate adhesives, may be decreased. In contrast, polyester resins having an isocyanuric ring do not decrease the solubility, and thus can be easily diluted.

In addition, since the isocyanuric ring is trifunctional, the polyester polyol compound that has an isocyanuric ring at the center of the resin skeleton and has a polyester skeleton having a particular structure in a branched chain of the isocyanuric ring can achieve a high cross-linking density. It is assumed that the number of gaps through which a gas such as oxygen passes can be reduced by increasing the cross-linking density. It is assumed that since the isocyanuric ring does not form an intermolecular hydrogen bond, has a high polarity, and achieves a high cross-linking density, the oxygen-barrier property and dry laminate adhesiveness can be reliably obtained.

In the present application, the content of the isocyanuric ring is determined by calculating, using a formula (c), the content of a residue ($C_3N_3O_3$ = 126.05) excluding $R_1$ to $R_3$ in the general formula (3) relative to the mass of the total solid content of the resin for adhesives of the present application.

[Math. 3]

{[(The number of moles of isocyanuric ring contained per molecule of P × 126.05/number-average molecular weight per molecule of P)] × weight of P used/total weight of solid content of organic resin composition for oxygen-barrier adhesives} × 100 (c)

P: Polyester polyol (A5) having isocyanuric ring

(Method for calculating mass of organic total solid content of resin composition for oxygen-barrier adhesives)

The mass of a total solid content of an organic resin composition for oxygen-barrier adhesives is defined as a mass calculated by subtracting the mass of a diluting solvent, the mass of a volatile component contained in a curing agent, and the mass of an inorganic component from the mass of the resin composition for oxygen-barrier adhesives in terms of parts by mass.

The polyester polyol having an isocyanuric ring can be obtained by a known method for producing polyester. Specifically, the polyester polyol can be synthesized by a production method in which a reaction is performed in the presence of a catalyst at a reaction temperature of 200°C to 220°C while removing produced water to the outside of the system.

A specific example of the method will be described. A triol having an isocyanuric ring, an aromatic polyvalent carboxylic acid having carboxylic groups at the ortho positions or an anhydride thereof, and a polyhydric alcohol component, all of which are used as raw materials, are charged at one time, and the temperature is then increased while mixing the raw materials under stirring to conduct a dehydration condensation reaction. The reaction is continued until an acid value determined by the method for measuring an acid value described in JIS-K0070 becomes 1 mg KOH/g or less and a hydroxyl value Z mg KOH/g determined by the method for measuring a hydroxyl value described in JIS-K0070 becomes within a range of $\pm$5% of a numerical value (mg KOH/g) of the right-hand side of a formula (d) below. Thus, a desired polyester polyol can be obtained.

[Math. 4]

$$Z = 3/((\text{molecular weight of potassium hydroxide}) \times 1{,}000 \times Mn) \quad (d)$$

(In the formula (d), Mn represents a predetermined number-average molecular weight of a certain trifunctional polyester resin.)

Alternatively, the raw material may be separately allowed to react with each other in multiple stages. The hydroxyl value may be adjusted to the range of $\pm$5% of the numerical value while adding a diol component that has been volatilized at the reaction temperature.

Examples of the catalyst used in the reaction include tin-based catalysts such as monobutyltin oxide and dibutyltin oxide; titanium-based catalysts such as tetraisopropyl titanate and tetrabutyl titanate; and zirconia-based catalysts such as tetrabutyl zirconate. The titanium-based catalysts such as tetraisopropyl titanate and tetrabutyl titanate and the zirconia-based catalysts, all of which have high activity to an esterification reaction, are preferably used in combination. The catalyst is used in an amount of 1 to 1,000 ppm, and more preferably 10 to 100 ppm relative to the total mass of the reaction raw materials used. When the amount of catalyst is smaller than 1 ppm, the effect of the catalyst is not easily obtained. When the amount of catalyst exceeds 1,000 ppm, a subsequent urethanization reaction tends to be inhibited.

Examples of a polyether polyol include polyether polyols obtained by addition polymerization of at least one monomer selected from ethylene oxide, propylene oxide, butylene oxide, styrene oxide, epichlorohydrin, cyclohexylene, and the like by an ordinary method using, as an initiator, at least one compound having two active hydrogen atoms, the compound being selected from ethylene glycol, diethylene glycol, triethylene glycol, propylene glycol, trimethylene glycol, 1,3-butanediol, 1,4-butanediol, 1,6-hexanediol, neopentyl glycol, and the like. As required, polyoxyalkylene monoalkyl ethers obtained by block copolymerization or random copolymerization of ethylene oxide serving as an essential component and at least one monomer selected from propylene oxide, butylene oxide, styrene oxide, epichlorohydrin, cyclohexylene, and the like using an alkyl alcohol having 1 to 4 carbon atoms as an initiator may be used in combination. Examples of the polyether polyol further include polytetramethylene glycol. Herein, the term "polytetramethylene glycol" refers to a polyol obtained by ring-opening polymerization of tetrahydrofuran. In synthesizing polytetramethylene glycol, a similar compound in which part of tetrahydrofuran is substituted with ethylene oxide or propylene oxide may be used. Alternatively, such a similar compound may be used in combination with polytetramethylene glycol.

The resin (A) particularly preferably has a number-average molecular weight of 450 to 5,000 because a cross-linking density that substantially achieves a good balance between an adhesive performance and an oxygen-barrier property. The number-average molecular weight is more preferably 500 to 3,000. The curing agent is most preferably a polyisocyanate described below because an appropriate reaction time can be provided and a particularly good adhesive strength and a particularly good oxygen-barrier property can be obtained. When the molecular weight is lower than 450,

a cohesive force of the resulting adhesive during coating becomes excessively small. Consequently, there may be problems such as the misalignment of films during lamination and partial separation of films that have been bonded to each other. On the other hand, when the molecular weight is higher than 5,000, the following problems occur: A viscosity during coating becomes excessively high and coating cannot be performed. Furthermore, lamination cannot be performed due to low adhesiveness. The number-average molecular weight is determined by a calculation using a measured hydroxyl value and the theoretical number of hydroxyl functional groups.

The resin (A) used in the present invention preferably has a glass transition temperature in the range of -30°C to 80°C. The glass transition temperature is more preferably 0°C to 60°C, and still more preferably 25°C to 60°C. When the glass transition temperature is higher than 80°C, flexibility of the polyester polyol at about room temperature decreases. As a result, adhesiveness to a substrate becomes poor, which may result in a decrease in the adhesive strength. On the other hand, when the glass transition temperature is lower than -30°C, the molecular motion of the polyester polyol at about room temperature is vigorous, and thus a sufficient oxygen-barrier property may not be exhibited.

A polyester polyurethane polyol or polyether polyurethane polyol that is prepared by urethane extension by a reaction between the resin (A) and a diisocyanate compound so as to have a number-average molecular weight of 1,000 to 15,000 may also be used as an adhesive. The polyol contains a component having a particular molecular weight or higher and has a urethane bond, and thus has a good oxygen-barrier property and a good initial cohesive force. Thus, the polyol can be used as an excellent adhesive used during lamination. When a ratio of hydroxyl groups to isocyanate groups in the resin (A) and the diisocyanate compound is controlled so that the isocyanate groups are excessive, the resulting polyol can have an isocyanate group at an end thereof. This polyol may be used as a curing agent.

(Adhesive: curing agent)

A curing agent used in the present invention is not particularly limited as long as the curing agent can react with a hydroxyl group of the resin (A). Known curing agents such as diisocyanate compounds, polyisocyanate compounds, and epoxy compounds can be used. Among these, from the viewpoint of adhesiveness and retort resistance, polyisocyanate compounds are preferably used.

Examples of the polyisocyanate compounds include aromatic diisocyanate compounds, aliphatic diisocyanate compounds, and trivalent or higher polyisocyanate compounds. The polyisocyanate compounds may be low-molecular weight compounds or high-molecular weight compounds. Examples thereof include tetramethylene diisocyanate, hexamethylene diisocyanate, toluene diisocyanate, diphenylmethane diisocyanate, hydrogenated diphenylmethane diisocyanate, xylylene diisocyanate, hydrogenated xylylene diisocyanate, isophorone diisocyanate, trimers of any of these isocyanate compounds; and adducts obtained by reacting an excessive amount of any of these isocyanate compounds with, for example, a low-molecular-weight active hydrogen compound such as ethylene glycol, propylene glycol, meta-xylylene alcohol, 1,3-bishydroxyethyl benzene, 1,4-bishydroxyethyl benzene, trimethylolpropane, glycerol, pentaerythritol, erythritol, sorbitol, ethylenediamine, monoethanolamine, diethanolamine, triethanolamine, meta-xylylenediamine, or an alkylene oxide adduct thereof, or a high-molecular-weight active hydrogen compound such as a polyester resin, a polyether polyol, or a polyamide.

The isocyanate compound may be a blocked isocyanate. Examples of an isocyanate blocking agent include phenols such as phenol, thiophenol, methylthiophenol, ethylthiophenol, cresol, xylenol, resorcinol, nitrophenol, and chlorophenol; oximes such as acetoxime, methyl ethyl ketoxime, and cyclohexanone oxime; alcohols such as methanol, ethanol, propanol, and butanol; halogen-substituted alcohols such as ethylene chlorohydrin and 1,3-dichloro-2-propanol; tertiary alcohols such as t-butanol and t-pentanol; and lactams such as ε-caprolactam, δ-valerolactam, γ-butyrolactam, and β-propiolactam. Examples of the isocyanate blocking agent further include aromatic amines; imides; active methylene compounds such as acetylacetone, acetoacetic acid esters, and ethyl malonate; mercaptans; imines; ureas; diaryl compounds; and sodium bisulfate. A blocked isocyanate is obtained by conducting an addition reaction between the above isocyanate compound and the isocyanate blocking agent using an appropriate known method.

Among the above compounds, in order to obtain a good oxygen-barrier property, xylylene diisocyanate, hydrogenated xylylene diisocyanate, toluene diisocyanate, diphenylmethane diisocyanate are preferable, and meta-xylylene diisocyanate, and hydrogenated meta-xylylene diisocyanate are the most preferable.

A cured coating film obtained by using the resin (A) and the polyisocyanate compound (B) of the present invention preferably has a glass transition temperature in the range of -30°C to 80°C. The glass transition temperature is more preferably 0°C to 70°C, and still more preferably 25°C to 70°C. When the glass transition temperature is higher than 80°C, flexibility of the cured coating film at about room temperature decreases. As a result, adhesiveness to a substrate becomes poor, which may result in a decrease in the adhesive strength. On the other hand, when the glass transition temperature is lower than -30°C, the molecular motion of the cured coating film at about room temperature is vigorous. Consequently, a sufficient oxygen-barrier property may not be exhibited, and the adhesive strength may be decreased by an insufficient cohesive force.

In the case where a carboxylic acid remains at an end of the resin (A) used in the present invention, an epoxy

compound can be used as the curing agent. Examples of the epoxy compound include bisphenol A diglycidyl ether and oligomers thereof, hydrogenated bisphenol A diglycidyl ether and oligomers thereof, diglycidyl orthophthalate, diglycidyl isophthalate, diglycidyl terephthalate, diglycidyl p-oxybenzoate, diglycidyl tetrahydrophthalate, diglycidyl hexahydrophthalate, diglycidyl succinate, diglycidyl adipate, diglycidyl sebacate, ethylene glycol diglycidyl ether, propylene glycol diglycidyl ether, 1,4-butanediol diglycidyl ether, 1,6-hexanediol diglycidyl ether, polyalkylene glycol diglycidyl ethers, triglycidyl trimellitate, triglycidyl isocyanurate, 1,4-diglycidyloxybenzene, diglycidylpropylene urea, glycerol triglycidyl ether, trimethylolethane triglycidyl ether, trimethylolpropane triglycidyl ether, pentaerythritol tetraglycidyl ether, and triglycidyl ethers of glycerol alkylene oxide adducts.

In the case where an epoxy compound is used as a curing agent, in order to accelerate curing, a known general-purpose epoxy curing accelerator may be added as required in a range that does not impair the oxygen-barrier property, which is an object achieved by the present invention.

In particular, the curing agent is preferably a polyisocyanate compound having an aromatic ring. The use of the polyisocyanate compound having a meta-xylene skeleton is preferable because an oxygen-barrier property can be improved not only by a hydrogen bond of a urethane group but also by $\pi$-$\pi$ stacking of the aromatic rings.

Examples of the form of the polyisocyanate compound having a meta-xylene skeleton include a trimer of xylylene diisocyanate, biuret products synthesized by a reaction with an amine, and adduct products synthesized by a reaction with an alcohol. The adduct products are more preferable than the trimers and the biuret products because solubility of a polyisocyanate compound in organic solvents used in a dry laminate adhesive is easily obtained. Adduct products synthesized by a reaction with an alcohol that is appropriately selected from the low-molecular-weight active hydrogen compounds described above can be used as the adduct products. Among such adduct products, adduct products with an ethylene oxide adduct of trimethylolpropane, glycerol, triethanolamine, or meta-xylylenediamine are particularly preferable.

Regarding a ratio of the resin (A) to the curing agent, the resin (A) and the curing agent are mixed so that a ratio of a hydroxyl group of the resin (A) to a reaction component of the cutting agent is preferably 1/0.5 to 1/10 (equivalent ratio) and more preferably 1/1 to 1/5. When the amount of curing agent component is larger than the above range, an excessive curing agent component remains and may be bled out from an adhesive layer after adhesion. On the other hand, when the amount of curing agent component is excessively small, the adhesive strength may be insufficient.

A known polymerization catalyst can be used as a catalyst for accelerating polymerization of a polymerizable carbon-carbon double bond. Examples of the polymerization catalyst include transition metal complexes. The transition metal complexes are not particularly limited as long as they are compounds having a capability of causing oxidation polymerization of a polymerizable double bond. Various metals or complexes thereof can be used. For example, it is possible to use salts of a metal such as cobalt, manganese, lead, calcium, cerium, zirconium, zinc, iron, or copper with octylic acid, naphthenic acid, neodecanoic acid, stearic acid, a resin acid, tall oil fatty acid, tung oil fatty acid, linseed oil fatty acid, soybean oil fatty acid, or the like. The amount of transition metal complex is 0 to 10 parts by mass and more preferably 0 to 3 parts by mass relative to the resin (A).

The curing agent may also be used in combination with a known curing agent or a known promoter selected in accordance with the type of curing agent. Examples of the adhesion promoter include coupling agents such as silane coupling agents, e.g., hydrolyzable alkoxysilane compounds, titanate-based coupling agents, and aluminum-based coupling agents, and epoxy resins. Silane coupling agents and titanate-based coupling agents are also preferred from the viewpoint of improving an adhesive to various film materials.

(Adhesive: other components)

The adhesive of the present invention may contain various additives in a range that does not impair the adhesive strength and the oxygen-barrier property. Examples of the additives include inorganic fillers such as silica, alumina, aluminum flakes, and glass flakes, stabilizers (such as antioxidants, thermal stabilizers, and ultraviolet absorbers), plasticizers, antistatic agents, lubricants, blocking-preventing agents, colorants, fillers, and crystal nucleating agents.

((C1) Plate-like inorganic compound)

The resin composition for adhesives of the present invention contains a plate-like inorganic compound (C1). The plate-like inorganic compound (C1) used in the present invention has an effect of improving the laminate strength, the oxygen-barrier property, and the light-blocking property of an adhesive obtained by curing the resin composition for adhesives.

The plate-like shape of the plate-like inorganic compound (C1) used in the present invention provides a feature that, in particular, the laminate strength and the barrier property are improved. Electric charges between layers of the plate-like inorganic compound (C1) do not significantly directly affect the barrier property. However, in the case of ionic inorganic compounds or inorganic compounds that are swellable in water, dispersibility of such an inorganic compound

in a. resin composition is significantly poor. Thus, when the amount of such an inorganic compound added is increased, the viscosity of the resin composition is increased or the resin composition exhibits thixotropy, resulting in a problem in terms of coating suitability. In contrast, in the case of uncharged (nonionic) inorganic compounds or inorganic compounds that are non-swellable in water, even when the amount of such an inorganic compound added is increased, the viscosity of the resulting resin composition is not easily increased and the resin composition does not easily exhibit thixotropy. Accordingly, coating suitability can be reliably obtained. Examples of the plate-like inorganic compound (C1) used in the present invention include hydrous silicates (such as phyllosilicate minerals), kaolinite-serpentinite-group clay minerals (such as halloysite, kaolinite, endellite, dickite, nacrite, antigorite, and chrysotile), pyrophillite-talc-group (such as pyrophillite, talc, and kerolite), smectite-group clay minerals (such as montmorillonite, beidellite, nontronite, saponite, hectorite, sauconite, and stevensite), vermiculite-group clay minerals (such as vermiculite), mica and mica-group clay minerals (such as mica, e.g., muscovite and phlogopite, margarite, tetrasilicic mica, and taeniolite), chlorite-group (such as cookeite, sudoite, clinochlore, chamosite, and nimite), hydrotalcite, plate-like barium sulfate, boehmite, and aluminum polyphosphate. These minerals may be naturally-occurring clay minerals or synthetic clay minerals. These inorganic layered compounds may be used alone or in combination of two or more compounds.

The plate-like inorganic compound (C1) used in the present invention is preferably a plate-like nonionic inorganic compound that does not have electric charges between layers.

Examples of such a plate-like inorganic compound (C1) used in the present invention include kaolinite-serpentinite-group clay minerals (such as halloysite, kaolinite, endellite, dickite, nacrite, antigorite, and chrysotile), and pyrophillite-talc-group (such as pyrophillite, talc, and kerolite).

The plate-like inorganic compound (C1) used in the present invention is preferably non-swellable in water.

Examples of such a plate-like inorganic compound (C1) used in the present invention include kaolinite-serpentinite-group clay minerals (such as halloysite, kaolinite, endellite, dickite, nacrite, antigorite, and chrysotile), pyrophillite-talc-group (such as pyrophillite, talc, and kerolite), mica and mica-group clay minerals (such as mica, e.g., muscovite and phlogopite, margarite, tetrasilicic mica, and taeniolite), chlorite-group (such as cookeite, sudoite, clinochlore, chamosite, and nimite), hydrotalcite, and plate-like barium sulfate.

The term "average particle size" in the present invention refers to a particle size whose frequency of appearance is the highest when a particle size distribution of a plate-like inorganic compound (C1) is measured with a light-scattering measuring device. The average particle size of the plate-like inorganic compound (C1) used in the present invention is not particularly limited. However, the average particle size of the plate-like inorganic compound (C1) is preferably 0.1 μm or more and more preferably 1 μm or more. When the average particle size is 0.1 μm or less, the length of a long side is short and thus the following problems occur. A bypass path of oxygen molecules is not long, and thus an oxygen-barrier performance is not easily improved, and the adhesive strength is not easily improved. The upper limit of the average particle size is not particularly limited. In the case where a plate-like inorganic compound (C1) having a large particle size is contained and defects such as streaks are generated on a coating surface due to the type of coating method used, a material having an average particle size of preferably 100 μm or less and more preferably 20 μm or less may be used.

The plate-like inorganic compound (C1) used in the present invention preferably has a high aspect ratio from the viewpoint of improving a barrier performance due to a labyrinth effect of oxygen. Specifically, the aspect ratio is preferably 3 or more, more preferably 10 or more, and most preferably 40 or more.

((C2) Light-blocking agent that can block light having wavelength of 350 nm or less)

In the present invention, besides the plate-like inorganic compound (C1), a light-blocking agent (C2) that can block light having a wavelength of 350 nm or less may also be used.

Examples of the light-blocking agent (C2) that can block light having a wavelength of 350 nm or less include UVA-blocking agents such as titanium oxide, zinc oxide, iron oxide, cerium oxide, zirconium oxide, carbon black, pigments, dyes, benzophenone-based compounds, oxybenzone, benzoylmethane-based compounds, butyl-methoxybenzoylmethane, and benzotriazole-based compounds; and organic ultraviolet-blocking agents such as cinnamic acid-based compounds, 2-ethylhexyl para-methoxycinnamate, para-amino benzoic acid-based compounds, octyl para-dimethylamino benzoate, camphor-based compounds, and methylbenzylidene camphor.

The amount of light-blocking agent added is preferably 0.1% to 30% by mass relative to the resin. When the amount of light-blocking agent added is less than 0.1% by mass, the function of blocking light cannot be exhibited. On the other hand, even when the light-blocking agent is used in an amount of more than 30% by mass, a significant improvement in the light-blocking property is not observed and the gas-barrier property may be impaired. Therefore, the use of the light-blocking agent in an amount of more than 30% by mass is not preferable.

Specific examples of the light-blocking agent that can be used include benzophenone-based compounds such as SEESORB 106 (Shipro Kasei Kaisha, Ltd.), SEESORB 107 (Shipro Kasei Kaisha, Ltd.), 2-2'-p-phenylenebis(3,1-oxazin-4-one), and 2-(4,6-diphenyl-1,3,5-triazin-2-yl)-5-(hexyl)oxyphenol; and benzotriazole-based compounds such as

TINUVIN PS (BASF), TINUVIN 99-2 (BASF), TINUVIN 384-2 (BASF), TINUVIN 900 (BASF), TINUVIN 928 (BASF), and TINUVIN 1130 (BASF); hydroxyphenyl triazine-based compounds such as TINUVIN 400 (BASF), TINUVIN 405 (BASF), TINUVIN 460 (BASF), TINUVIN 477 (BASF), TINUVIN 479 (BASF), SEESORB 701 (Shipro Kasei Kaisha, Ltd.), and SEESORB 707 (Shipro Kasei Kaisha, Ltd.), 2-(5-methyl-2-hydroxyphenyl)benzotriazole, 2-[2-hydroxy-3,5-bis($\alpha$,$\alpha$'-dimethyl benzyl)phenyl]benzotriazole, and 2-(4,6-diphenyl-1,3,5-triazin-2-yl-5-(hexyl)oxyphenol.

In the present invention, the plate-like inorganic compound (C1) and the light-blocking agent (C2) that can block light having a wavelength of 350 nm or less may be used in combination. Alternatively, one of the plate-like inorganic compound (C1) and the light-blocking agent (C2) may be used.

In the present invention, a content of the plate-like inorganic compound (C1) or the light-blocking agent (C2) that can block light having a wavelength of 350 nm or less is not particularly limited but preferably 5 to 50 parts by mass relative to 100 parts by mass of the total mass of the resin (A), the polyisocyanate compound (B), and the plate-like inorganic compound (C1) or the light-blocking agent (C2) that can block light having a wavelength of 350 nm or less. The reason for this is as follows. When the content of the plate-like inorganic compound (C1) or the light-blocking agent (C2) is 5 parts by mass or less, the barrier performance is not easily improved. When the content of the plate-like inorganic compound (C1) or the light-blocking agent (C2) is 50 parts by mass or more, the adhesiveness of a coating surface is decreased. This may cause problems that the lamination operation is not easily performed, and that the adhesive strength is insufficient.

The content (PWC of the mixture) of the plate-like inorganic compound (C1) or the light-blocking agent (C2) that can block light having a wavelength of 350 nm or less can be determined by a formula (e) below.

[Math. 5]

$$\text{PWC of mixture (\%)} = \text{content of added compound (solid content weight)} / (\text{content of resin (A) (solid content weight)} + \text{content of polyisocyanate (solid content weight)} + \text{content of added compound (solid content weight)}) \times 100 \quad \text{(e)}$$

Note that the added compound in the above formula represents the plate-like inorganic compound (C1) or the light-blocking agent (C2) that can block light having a wavelength of 350 nm or less.

A known dispersion method can be employed as a method for dispersing the light-blocking agent (C2) that can block light having a wavelength of 350 nm or less or the plate-like inorganic compound (C1) used in the present invention in the resin (A) or the resin composition for oxygen-barrier adhesives. Examples of an apparatus used in the dispersion method include an ultrasonic homogenizer, a high-pressure homogenizer, a paint conditioner, a ball mill, a roll mill, a sand mill, a sand grinder, a Dyno mill, a Dispermat, a Nanomill, an SC mill, and a Nanomizer. Still more preferably, examples of an apparatus that can generate a higher shear stress include a Henschel mixer, a pressure kneader, a Banbury mixer, a planetary mixer, a two-roll mill, and a three-roll mill. These apparatuses may be used alone or in combination of two or more apparatuses.

Furthermore, a known acid anhydride may also be used as an additive in combination in order to further improve acid resistance of an adhesive layer. Examples of the acid anhydride include phthalic anhydride, succinic anhydride, Het anhydride, himic anhydride, maleic anhydride, tetrahydrophthalic anhydride, hexahydrophthalic anhydride, tetrabromophthalic anhydride, tetrachlorophthalic anhydride, trimellitic anhydride, pyromellitic anhydride, benzophenonetetracarboxylic anhydride, 2,3,6,7-naphthalentetracarboxylic dianhydride, 5-(2,5-oxotetrahydrofuryl)-3-methyl-3-cyclohexene-1,2-dicarboxylic anhydride, and styrene-maleic anhydride copolymers.

Compounds having an oxygen-trapping function or the like may also be added as required. Examples of the compounds having an oxygen-trapping function include low-molecular-weight organic compounds that react with oxygen, such as hindered phenols, vitamin C, vitamin E, organophosphorus compounds, gallic acid, and pyrogallol, and compounds of transition metals such as cobalt, manganese, nickel, iron, and copper.

In order to improve the adhesiveness to various film materials immediately after application, an adhesiveness-imparting agent such as a xylene resin, a terpene resin, a phenolic resin, or a rosin resin may be added as required. When such an adhesiveness-imparting agent is added, the amount added is preferably within a range of 0.01 to 5 parts by mass relative to 100 parts by mass of the total amount of the resin (A) and the curing agent.

As a method for reacting a polymerizable double bond, active energy rays may also be used. A known technique can be used for applying active energy rays. Curing can be conducted by irradiation with, for example, ionizing radiation such as an electron beam, ultraviolet light, or $\gamma$ rays. In the case where curing is conducted with ultraviolet light, a known ultraviolet irradiation device including a high-pressure mercury-vapor lamp, an excimer lamp, a metal halide lamp, or

the like can be used.

In the case where curing is conducted by irradiation with ultraviolet light, about 0.1 to 20 parts by mass of a photo(polymerization) initiator that generates a radical by irradiation with ultraviolet light is preferably added relative to 100 parts by mass of the resin (A) as required.

Examples of the photo(polymerization) initiator that generates a radical include hydrogen-abstracting compounds such as benzil, benzophenone, Michler's ketone, 2-chlorothioxanthone, and 2,4-diethylthioxanthone; and photo-cleavable compounds such as benzoin ethyl ether, diethoxyacetophenone, benzyl methyl ketal, hydroxycyclohexyl phenyl ketone, and 2-hydroxy-2-methyl phenyl ketone. These initiators may be used alone or in combination of two or more compounds.

(Adhesive form)

The adhesive of the present invention may be used in either a solvent-based form or a solvent-free form. In the case of a solvent-based form, a solvent may be used as a reaction medium during production of a polyester polyol and a curing agent. The solvent may also be used as a diluent during application of the adhesive. Examples of the solvent that can be used include esters such as ethyl acetate, butyl acetate, and cellosolve acetate; ketones such as acetone, methyl ethyl ketone, isobutyl ketone, and cyclohexanone; ethers such as tetrahydrofuran and dioxane; aromatic hydrocarbons such as toluene and xylene; halogenated hydrocarbons such as methylene chloride and ethylene chloride; dimethylsulfoxide; and dimethylsulfonamide. Among these solvents, ethyl acetate and methyl ethyl ketone are usually preferably used. In the case where the adhesive of the present invention is used in a solvent-free form, it is believe that the adhesive is not necessarily soluble in organic solvents. However, considering washing of a reaction vessel during the synthesis and washing of a coater or the like during lamination, solubility in organic solvents is necessary.

The adhesive of the present invention can be used by applying the adhesive onto a substrate film or the like. The coating method is not particularly limited, and known methods may be employed. For example, in the case of a solvent-based form in which the viscosity can be adjusted, the adhesive is often applied using a gravure roll coating method or the like. In the case of a solvent-free form in which the viscosity at room temperature is excessively high and not suitable for gravure roll coating, the adhesive may be applied while heating using a roll coater. When a roll coater is used, the adhesive of the present invention is preferably heated to a temperature in the range of room temperature to about 120°C such that the viscosity of the adhesive becomes about 500 to 2,500 mPa·s, and applied in this state.

The adhesive of the present invention can be used as an oxygen-barrier adhesive on polymers, paper, metals, etc. for various types of applications that require oxygen-barrier properties.

An adhesive for film lamination will now be described as an example of one specific application of the adhesive.

The adhesive of the present invention can be used as an adhesive for film lamination. The laminated multilayer film exhibits a good oxygen-barrier property, and thus can be used as an oxygen-barrier laminated film.

Films for lamination used in the present invention are not particularly limited. Thermoplastic resin films can be appropriately selected in accordance with the desired application. Examples of films for foodstuff packaging include PET films, polystyrene films, polyamide films, polyacrylonitrile films, polyolefin films such as polyethylene films (LLDPE: low-density polyethylene films, HDPE: high density polyethylene films) and polypropylene films (CPP: non-oriented polypropylene films, OPP: biaxially oriented polypropylene films), polyvinyl alcohol films, and ethylene-vinyl alcohol copolymer films. These films may be subjected to an orientation treatment. The orientation treatment usually performed by extruding a melted resin into a sheet using an extrusion film forming method or the like, and then performing simultaneous biaxial orientation or sequential biaxial orientation. In the case of sequential biaxial orientation, in general, longitudinal orientation is performed first, and transverse orientation is then performed. Specifically, a method that combines longitudinal orientation using a difference in speed between rollers and transverse orientation using a tenter is often employed. However, in the case where a transparent vapor-deposited film having a high oxygen-barrier property is provided on both sides of an adhesive prepared by using the polyester polyol (A2) as an adhesive component, polymerization of the polymerizable double bond of the polyester polyol (A2) used as an adhesive component is inhibited, and a good barrier property is not exhibited in some cases. Accordingly, regarding an oxygen-barrier property of an oxygen-barrier laminated film when the polyester polyol (A2) is used as an adhesive component, at least one laminate film preferably has an oxygen transmission rate of 0.1 cc/m$^2$·day·atm or more.

The adhesive of the present invention can be preferably used as an adhesive for laminated films obtained by bonding a plurality of the same type or different types of resin films to each other. The resin films may be appropriately selected in accordance with the purpose. For example, when the laminated film is used as a packaging material, the following composite films can be preferably used as a foodstuff packaging material functioning as an oxygen-barrier film: Specifically, the composite films are a composite film including two layers, namely, an outermost layer which is a thermoplastic resin film composed of a resin selected from PET, OPP, and polyamides and an innermost layer which is a thermoplastic resin film composed of a resin selected from non-oriented polypropylene (hereinafter abbreviated as "CPP") and low-density polyethylene (hereinafter abbreviated as "LLDPE"); a composite film including three layers,

namely, an outermost layer which is a thermoplastic resin film composed of a resin selected from, for example, PET, polyamides, and OPP, an intermediate layer which is a thermoplastic resin film composed of a resin selected from OPP, PET, and polyamides, and an innermost layer which is a thermoplastic resin film composed of a resin selected from CPP and LLDPE; and a composite film including four layers, namely, an outermost layer which is a thermoplastic resin film composed of a resin selected from OPP, PET, and polyamides, a first intermediate layer which is a thermoplastic resin film composed of a resin selected from PET and nylons, a second intermediate layer which is a thermoplastic resin film composed of a resin selected from PET and polyamides, and an innermost layer which is a thermoplastic resin film composed of a resin selected from LLDPE and CPP.

Furthermore, in order to form an adhesive layer having no defects such as cracking or cissing, the film surface may be subjected to a surface treatment such as a flame treatment or a corona discharge treatment as required.

An oxygen-barrier laminated film of the disclosure is obtained by applying an adhesive of the present invention onto one of the thermoplastic resin films described above, then overlaying the other thermoplastic resin film thereon, and bonding the films to each other by lamination. Known lamination methods such as dry lamination, non-solvent lamination, and extrusion lamination can be used as the lamination method.

Specifically, in the dry lamination method, an adhesive of the present invention is applied onto one substrate film by a gravure roll method, another substrate film is then overlaid thereon, and the films are bonded to each other by dry lamination. The temperature of lamination rollers is preferably in the range of room temperature to about 60°C.

In the non-solvent lamination, an adhesive of the present invention is preheated to a temperature in the range of room temperature to about 120°C, and is then applied onto a substrate film using a roll such as a roll coater heated to a temperature in the range of room temperature to about 120°C. A new film material is then immediately bonded to a surface of the adhesive to obtain a laminated film. A lamination pressure is preferably in the range of about 10 to 300 $kg/cm^2$.

In the case of the extrusion lamination method, an organic solvent solution of an adhesive of the present invention is applied as an adhesion auxiliary agent (anchor coating agent) onto a substrate film using a roll such as a gravure roll, and drying of the solvent and a curing reaction are performed at a temperature in the range of room temperature to 140°C. Subsequently, a melted polymer material is laminated by using an extruder to obtain a laminated film. Examples of the polymer material to be melted include polyolefin resins such as low-density polyethylene resins, linear low-density polyethylene resins, and ethylene-vinyl acetate copolymer resins.

The oxygen-barrier laminated film of the present invention is preferably subjected to aging after the preparation. Regarding the aging conditions, in the case where a polyisocyanate is used as the curing agent, the aging is performed at a temperature in the range of room temperature to 80°C for 12 to 240 hours. During this period, the adhesive strength is generated.

Since the adhesive of the present invention has a high oxygen-barrier property, a laminated film formed by using the adhesive can exhibit a very high level of gas-barrier property without using typically used gas-barrier materials such as polyvinylidene chloride (PVDC) coating layers, polyvinyl alcohol (PVA) coating layers, ethylene-vinyl alcohol copolymer (EVOH) film layers, metal-xylylene adipamide film layers, and inorganic vapor-deposited film layers formed by vapor deposition of alumina, silica, or the like.

In the present disclosure, in order to provide a higher barrier function, as required, a film produced by laminating a vapor-deposited layer of a metal such as aluminum or a metal oxide such as silica or alumina, or a barrier film that includes a gas-barrier layer composed of polyvinyl alcohol, ethylene-vinyl alcohol copolymer, vinylidene chloride, or the like may be used in combination.

EXAMPLES

The present invention will now be more specifically described using Examples and Comparative Examples. In the Examples and Comparative Examples, the units "parts" and "%" are on a mass basis, unless otherwise stated.

(Production Example 1) Production example of resin (A): Gly(OPAEG)2MA

In a polyester reaction container equipped with a stirrer, a nitrogen gas inlet tube, a rectifying tube, a water separator, etc., 1,316.8 parts of phthalic anhydride, 573.9 parts of ethylene glycol, 409.3 parts of glycerin, and titanium tetraisopropoxide in an amount corresponding to 100 ppm relative to the total amount of the polyvalent carboxylic acid and the polyhydric alcohols were charged. The mixture was gradually heated so that the temperature at a top portion of the rectifying tube did not exceed 100°C, and the internal temperature was maintained at 220°C. At the time when the acid value became 1 mg KOH/g or less, the esterification reaction was terminated. Thus, a polyester polyol having a hydroxyl value of 339.9 mg KOH/g was prepared. Subsequently, the temperature was decreased to 120°C, and 421.8 parts of maleic anhydride was charged in the polyester polyol, and the temperature of 120°C was maintained. At the time when the acid value became about half of the acid value calculated from the amount of maleic anhydride charged,

the esterification reaction was terminated. Thus, a polyester polyol having a number-average molecular weight of about 520, a hydroxyl value of 216.6 mg KOH/g, and an acid value of 96.2 mg KOH/g was obtained. The numbers of functional groups per molecule of the resulting resin (A) are as follows in terms of design. Hydroxyl group: 2, Carboxyl group: 1

(Production Example 2) Production example of resin (A): THEI(OPAEG)3

In a polyester reaction container equipped with a stirrer, a nitrogen gas inlet tube, a rectifying tube, a water separator, etc., 1,136.5 parts of phthalic anhydride, 495.3 parts of ethylene glycol, 668.1 parts of trims(2-hydroxyethyl)isocyanurate, and titanium tetraisopropoxide in an amount corresponding to 100 ppm relative to the total amount of the polyvalent carboxylic acid and the polyhydric alcohols were charged. The mixture was gradually heated so that the temperature at a top portion of the rectifying tube did not exceed 100°C, and the internal temperature was maintained at 220°C. At the time when the acid value became 1 mg KOH/g or less, the esterification reaction was terminated. Thus, a polyester polyol having a number-average molecular weight of about 860, a hydroxyl value of 195.4 mg KOH/g, and an acid value of 0.9 mg KOH/g was obtained. The numbers of functional groups per molecule of the resulting resin (A) are as follows in terms of design. Hydroxyl group: 3, Carboxyl group: 0

(Preparation of adhesive main agent)

A resin (A), an inorganic compound, and an organic solvent that are described in the columns of a main agent in Tables 1 to 8 were mixed. Zirconia beads were put in a container in the same mass as the resulting mixture. Dispersion was conducted for about one hour with a paint conditioner to prepare a main agent in which the inorganic compound was dispersed.

(Example 1) to (Example 12)

A resin (A), an inorganic compound, a curing agent, and a solvent were mixed in accordance with Examples described in Tables 1 to 8 to prepare adhesives. Coating and evaluation were performed in accordance with a coating method and evaluation methods described below.

(Comparative Example 1) to (Comparative Example 10)

A resin, an inorganic compound, a curing agent, and a solvent were mixed in accordance with Comparative Examples described in Tables 2, 5, 6, and 8 to prepare adhesives. Coating and evaluation were performed in accordance with a coating method and evaluation methods described below.

(Example 13), (Example 14), and (Comparative Example 11)

A resin (A), an inorganic compound, a curing agent, and a solvent were mixed in accordance with Examples and Comparative Example described in Table 9 to prepare adhesives. Coating was performed in accordance with (Coating method 2) described below. An ultraviolet transmission rate of each of the resulting laminated films was measured. The ultraviolet transmission rate was measured with a spectrophotometer (U-3000 spectrophotometer, manufactured by Hitachi, Ltd.). The ultraviolet transmission rates in the table are values at 350 nm, and all the values are represented in units of %.

(Coating method 1)

The solvent-based adhesive was applied onto a corona-treated surface of a PET film ("E-5102" manufactured by Toyobo Co., Ltd.) having a thickness of 12 μm using a bar coater so that the coating amount was 5.0 g/$m^2$ (solid content). The diluting solvent was dried by volatilization in a dryer set to a temperature of 70°C. The adhesive surface of the PET film having the adhesive thereon was laminated with a corona-treated surface of a CPP film ("ZK93KM", manufactured by Toray Industries, Inc.) having a thickness of 70 μm, thus preparing a composite film having a layer structure of PET film/adhesive layer/CPP film. Subsequently, the composite film was aged at 40°C for 3 days to cure the adhesive, thus obtaining a laminated film of the present invention.

(Coating method 2)

The solvent-based adhesive was applied onto a corona-treated surface of a nylon film ("Emblem ON-BC" manufactured by UNITIKA Ltd.) having a thickness of 15 μm using a bar coater so that the coating amount was 5.0 g/$m^2$

(solid content). The diluting solvent was dried by volatilization in a dryer set to a temperature of 70°C. The adhesive surface of the PET film having the adhesive thereon was laminated with a corona-treated surface of an L-LDPE film ("TUX-HC", manufactured by Tohcello Inc.) having a thickness of 60 μm, thus preparing a composite film having a layer structure of PET film/adhesive layer/CPP film. Subsequently, the composite film was aged at 40°C for 3 days to cure the adhesive, thus obtaining a laminated film of the present invention.

(Evaluation methods)

(1) Laminate strength

After the completion of the aging, the laminated film was cut in a direction parallel to the coating direction so as to have a width of 15 mm. The PET film and the CPP film of the laminated film were separated by a 180-degree peeling method using a Tensilon universal testing machine manufactured by Orientec Co., Ltd. at an atmospheric temperature of 25°C and a peel rate of 300 mm/min. A tensile strength measured at this time was defined as a laminate strength. The laminate strength was represented in units of N/:15 mm.

(2) Oxygen transmission rate

After the completion of the aging, the oxygen transmission rate of the laminated film was measured in accordance with JIS-K7126 (equal pressure method) using an oxygen transmission rate measuring device OX-TRAN 2/21 MH manufactured by Mocon, Inc. in an atmosphere at 23°C and 90% RH. Note that RH represents the humidity.

An oxygen-barrier property of a single adhesive cured coating film was calculated from the measurement results of an oxygen-barrier laminated film, a PET film, and a CPP film using a formula (f).

[Math. 6]

$$1/P = 1/P1 + 1/P2 + 1/P3 \qquad (f)$$

P: oxygen transmission rate of oxygen-barrier laminated film

P1: oxygen transmission rate of single coating film

P2: oxygen transmission rate of PET film (calculated on the assumption that the oxygen transmission rate of the PET film is 100 cc/$m^2$·day·atm)

P3: oxygen transmission rate of CPP film (calculated on the assumption that the oxygen transmission rate of the CPP film is 900 cc/$m^2$·day·atm)

(Measurement of glass transition temperature of cured coating film)

A resin (A), a curing agent, an inorganic compound, and a solvent were mixed in accordance with Tables 1 to 8. The mixture was applied onto a non-corona-treated surface of a CPP film using an applicator. The resulting film was dried under a reduced pressure, and then treated at 40°C for 3 days. The cured coating film was separated from the CPP film. Elastic moduli of the cured coating film were measured with a rheometric system analyzer RSAIII manufactured by TA Instruments Japan Inc. under the conditions in the range of -50°C to 200°C, at 1 Hz, and a temperature-increasing speed of 3°C/min. Subsequently, tan δ was calculated from the measured dynamic storage modulus and the measured dynamic loss modulus using a formula described below. A temperature that shows a peak value of the tan δ was defined as a glass transition temperature.

[Math. 7]

$$\tan\delta = \text{dynamic loss modulus}/\text{dynamic storage modulus}$$

(Solubility)

The resin (A) described in each of the production examples was mixed with ethyl acetate or methyl ethyl ketone (abbreviated as "MEK") so that the non-volatile content was 50%, and solubility was examined. In the case where the

resulting liquid became transparent, it was determined that the solubility was good and the result was represented by "○". In the case where turbidity was generated, it was determined that the solubility was not good and the result was represented by "×".

[Table 1]

| | | Example 1 | Example 2 | Example 3 |
|---|---|---|---|---|
| Main agent | Resin (A) GLY(OPAEG) 2MA | 40.0 | 40.0 | 40.0 |
| | Inorganic compound | 10.0 | 10.0 | |
| | | BARRISURF HX | ASP-400P | MICRO ACE K-1 |
| | Ethyl acetate | 50.0 | 50.0 | 50.0 |
| Curing agent | Polyisocyanate (TAKENATE 500) | 11.6 | 11.6 | 11.6 |
| | Polyisocyanate (TAKENATE D110N) | 33.9 | 33.9 | 33.9 |
| | Ethyl acetate | 8.3 | 8.3 | 8.3 |
| PWC of mixture | (%) | 11.5 | 11.5 | 11.5 |
| Physical properties of laminated product | Appearance (Coating surface) | ○ | ○ | ○ |
| | Appearance (Appearance of laminated product) | ○ | ○ | ○ |
| | Laminate strength (N/15 mm) | 4.5 | 4.2 | 4.0 |
| | Oxygen barrier (cc/$m^2$·day·atm) | 7.4 | 8.0 | 8.0 |
| Oxygen-barrier property of single coating film | Calculated value (in terms of 5 g/$m^2$) (cc/$m^2$·day·atm) | 8.0 | 8.8 | 8.8 |
| Tg of cured coating film | °C | Not measured | Not measured | Not measured |
| Solubility | Ethyl acetate | ○ | ○ | ○ |
| | MEK | ○ | ○ | ○ |
| Ratio of double-bond component in polyester polyol | wt% | 13.0 | 13.0 | 13.0 |
| Content of glycerol skeleton in organic resin composition for oxygen-barrier adhesive | wt% | 8.9 | 8.9 | 8.9 |
| Content of isocyanuric ring in organic resin composition for oxygen-barrier adhesive | wt% | 0.0 | 0.0 | 0.0 |

[Table 2]

| | | Comparative Example 1 | Comparative Example 2 |
|---|---|---|---|
| Main agent | Resin (A) GLY(OPAEG)2MA | 50.0 | 40.0 |
| | Inorganic compound | - | 10.0 |
| | | - | Cloisite Na- |
| | Ethyl acetate | 50.0 | 50.0 |
| Curing agent | Polyisocyanate (TAKENATE 500) | 14.5 | 11.6 |
| | Polyisocyanate (TAKENATE D110N) | 42.4 | 33.9 |
| | Ethyl acetate | 10.4 | 8.3 |
| PVVC of mixture | (%) | 0 | 11.5 |
| Physical properties of laminated product | Appearance (Coating surface) | ○ | Rough |
| | Appearance (Appearance of laminated product) | ○ | × |
| | Laminate strength (N/15 mm) | 3.6 | 1.0 |
| | Oxygen barrier ($cc/m^2 \cdot day \cdot atm$) | 10.0 | 80.0 |
| Oxygen-barrier property of single coating film | Calculated value (in terms of 5 $g/m^2$) ($cc/m^2 \cdot day \cdot atm$) | 11.2 | 620.5 |
| Tg of cured coating film | °C | 59.0 | Not measured |
| Solubility | Ethyl acetate | ○ | ○ |
| | MEK | ○ | ○ |
| Ratio of double-bond component in polyester polyol | wt% | 13.0 | 13.0 |
| Content of glycerol skeleton in organic resin composition for oxygen-barrier adhesive | wt% | 8.9 | 8.9 |
| Content of isocyanuric ring in organic resin composition for oxygen-barrier adhesive | wt% | 0.0 | 0.0 |

[Table 3]

| | | Example 4 | Example 5 | Example 6 |
|---|---|---|---|---|
| Main agent | Resin (A) THEI(OPAEG)3 | 40.0 | 40.0 | 30.0 |
| | Inorganic compound | 10.0 | 10.0 | 20.0 |
| | | PDM-5B | PDM-10BY | BARRISURF HX |
| | Ethyl acetate | 50.0 | 50.0 | 50.0 |
| Curing agent | Polyisocyanate (TAKENATE 500) | 11.0 | 11.0 | 8.0 |
| | Polyisocyanate (TAKENATE D110N) | 32.0 | 32.0 | 24.0 |
| | Ethyl acetate | 8.0 | 8.0 | 6V |
| PWC of mixture | (%) | 11.7 | 11.7 | 26.2 |

(continued)

| | | Example 4 | Example 5 | Example 6 |
|---|---|---|---|---|
| Physical properties of laminated product | Appearance (Coating surface) | ○ | ○ | Uneven |
| | Appearance (Appearance of laminated product) | ○ | ○ | Δ Uneven |
| | Laminate strength (N/15 mm) | 3.8 | 3.7 | 5.0 |
| | Oxygen barrier (cc/$m^2$·day·atm) | 11.0 | 8.0 | 8.0 |
| Oxygen-barrier property of single coating film | Calculated value (in terms of 5 g/$m^2$) (cc/$m^2$·day·atm) | 12.5 | 8.8 | 8.8 |
| Tg of cured coating film | °C | Not measured | Not measured | Not measured |
| Solubility | Ethyl acetate | ○ | ○ | ○ |
| | MEK | ○ | ○ | ○ |
| Ratio of double-bond component in polyester polyol | wt% | 0.0 | 0.0 | 0.0 |
| Content of glycerol skeleton in organic resin composition for oxygen-barrier adhesive | wt% | 0.0 | 0.0 | 0.0 |
| Content of isocyanuric ring in organic resin composition for oxygen-barrier adhesive | wt% | 7.8 | 7.8 | 7.8 |

[Table 4]

| | | Example 7 | Example 8 |
|---|---|---|---|
| Main agent | Resin (A) THEI(OPAEG)3 | 35.0 | 40.0 |
| | Inorganic compound | 15.0 | 10.0 |
| | | BARRISURF HX | BARRISURF HX |
| | Ethyl acetate | 50.0 | 50.0 |
| Curing agent | Polyisocyanate (TAKENATE 500) | 10.0 | 11.0 |
| | Polyisocyanate (TAKENATE D110N) | 28.0 | 32.0 |
| | Ethyl acetate | 7.0 | 8.0 |
| PWC of mixture | (%) | 18.6 | 11.7 |
| Physical properties of laminated product | Appearance (Coating surface) | Somewhat matte | ○ |
| | Appearance (Appearance of laminated product) | ○ | ○ |
| | Laminate strength (N/15 mm) | 4.5 | 3.8 |
| | Oxygen barrier (cc/$m^2$·day·atm) | 8.0 | 9.0 |
| Oxygen-barrier property of single coating film | Calculated value (in terms of 5 g/$m^2$) (cc/$m^2$·day·atm) | 8.8 | 10.0 |

(continued)

| | | Example 7 | Example 8 |
|---|---|---|---|
| Tg of cured coating film | °C | Not measured | Not measured |
| Solubility | Ethyl acetate | ○ | ○ |
| | MEK | ○ | ○ |
| Ratio of double-bond component in polyester polyol | wt% | 0.0 | 0.0 |
| Content of glycerol skeleton in organic resin composition for oxygen-barrier adhesive | wt% | 0.0 | 0.0 |
| Content of isocyanuric ring in organic resin composition for oxygen-barrier adhesive | wt% | 7.8 | 7.8 |

[Table 5]

| | | Comparative Example 3 | Comparative Example 4 | Comparative Example 5 |
|---|---|---|---|---|
| Main agent | Resin (A) THEI(OPAEG)3 | 50.0 | 40.0 | 45.0 |
| | Inorganic compound | - | 10.0 | 5.0 |
| | | - | OPTIGEL CL | NTS-5*1) |
| | Ethyl acetate | 50.0 | 50.0 | 50.0 |
| Curing agent | Polyisocyanate (TAKENATE 500) | 14.0 | 11.0 | 13.0 |
| | Polyisocyanate (TAKENATE D110N) | 40.0 | 32.0 | 36.0 |
| | Ethyl acetate | 10.0 | 8.0 | 9.0 |
| PWC of mixture | (%) | 0 | 11.7 | 5.6 |
| Physical properties of laminated product | Appearance (Coating surface) | ○ | Matte | Rough |
| | Appearance (Appearance of laminated product) | ○ | × | × |
| | Laminate strength (N/15 mm) | 3.0 | 2.0 | 3.5 |
| | Oxygen barrier (cc/m$^2$·day·atm) | 13.0 | 36.0 | 63.0 |
| Oxygen-barrier property of single coating film | Calculated value (in terms of 5 g/m$^2$) (cc/m$^2$·day·atm) | 15.1 | 59.2 | 200.6 |
| Tg of cured coating film | °C | 55.0 | Not measured | Not measured |
| Solubility | Ethyl acetate | ○ | ○ | ○ |
| | MEK | ○ | ○ | ○ |
| Ratio of double-bond component in polyester polyol | wt% | 0.0 | 0.0 | 0.0 |
| Content of glycerol skeleton in organic resin composition for oxygen-barrier adhesive | wt% | 0.0 | 0.0 | 0.0 |

(continued)

| | | Comparative Example 3 | Comparative Example 4 | Comparative Example 5 |
|---|---|---|---|---|
| Content of isocyanuric ring in organic resin composition for oxygen-barrier adhesive | wt% | 7.8 | 7.8 | 7.8 |
| *) NTS-5 was dehydrated and used at the time of dispersion. | | | | |

The amount shown in the table is an amount mixed after the dehydration.

[Table 6]

| | | Comparative Example 6 | Comparative Example 7 | Comparative Example 8 |
|---|---|---|---|---|
| Main agent | Resin (A) | 40.0 | 80.0 | 80.0 |
| | | THEI(OPAEG) 3 | LX703VL | LX703VL |
| | Inorganic compound | 33.0 | - | 47.0 |
| | | MEK-ST | - | MEK-ST |
| | Ethyl acetate | 50.0 | - | - |
| Curing agent | Polyisocyanate (TAKENATE 500) | 11.0 | - | - |
| | Polyisocyanate (TAKENATE D110N) | 32.0 | 10.0 | 10.0 |
| | Ethyl acetate | - | 35.0 | 20.0 |
| PWC of mixture | (%) | 11.8 | 0 | 19.8 |
| Physical properties of laminated product | Appearance (Coating surface) | ○ | ○ | ○ |
| | Appearance (Appearance of laminated product) | ○ | ○ | ○ |
| | Laminate strength (N/ 15 mm) | 3.0 | 4.6 | 3.2 |
| | (cc/m$^2$·day·atm) | 12.9 | 88.0 | 87.6 |
| Oxygen-barrier property of single coating film | (cc/m$^2$·day·atm) | 15.0 | 2,103.8 | 1,918.1 |
| Tg of cured coating film | °C | Not measured | 19.0 | Not measured |
| Solubility | Ethyl acetate | ○ | ○ | ○ |
| | MEK | ○ | ○ | ○ |
| Ratio of double-bond component in polyester polyol | wt% | 0.0 | 0.0 | 0.0 |
| Content of glycerol skeleton in organic resin composition for oxygen-barrier adhesive | wt% | 0.0 | 0.0 | 0.0 |
| Content of isocyanuric ring in organic resin composition for oxygen-barrier adhesive | wt% | 7.8 | 0.0 | 0.0 |

[Table 7]

| | | Example 9 | Example 10 | Example 11 |
|---|---|---|---|---|
| | Resin (A) | 80.0 | 80.0 | 80.0 |
| | | LX703VL | LX703VL | LX-963 |
| | Inorganic compound | 12.0 | 12.0 | 12.0 |
| | | PDM-10BY | ST-100 | ST-301 |
| | Ethyl acetate | 35.0 | 35.0 | - |
| Curing agent | | 10.0 | 10.0 | 5.0 |
| | Polyisocyanate | TAKENATE D110N | TAKENATE D110N | TAKENATE D110N |
| | Ethyl acetate | 20.0 | 20.0 | 30.0 |
| PWC of mixture | (%) | 17.4 | 17.4 | 21.4 |
| Physical properties of laminated product | Appearance (Coating surface) | ○ | ○ | ○ |
| | Appearance (Appearance of laminated product) | ○ | ○ | ○ |
| | Laminate strength (N/15 mm) | 5.5 | 6.0 | 9.2 |

[Table 8]

| | | Example 12 | Comparative Example 9 | Comparative Example 10 |
|---|---|---|---|---|
| | Resin (A) | 100.0 | 80.0 | 100.0 |
| | | LX-415A | LX-963 | LX-415A |
| | Inorganic compound | 40.0 | | |
| | | ST-301 | - | - |
| | Ethyl acetate | - | - | - |
| Curing agent | Polyisocyanate | 100.0 | 5.0 | 100.0 |
| | | SP-75 | TAKENATE D110N | SP-75 |
| | Ethyl acetate | 150.0 | 30.0 | 12.0 |
| PWC of mixture | (%) | 21.6 | 0 | 0 |
| Physical properties of laminated product | Appearance (Coating surface) | ○ | ○ | ○ |
| | Appearance (Appearance of laminated product) | ○ | ○ | ○ |
| | Laminate strength (N/15 mm) | 8.6 | 7.0 | 6.4 |

[Table 9]

| | | Example 13 | Example 14 | Comparative Example 11 |
|---|---|---|---|---|
| Main agent | Polyester polyol | 40 | 40 | 40 |
| | Inorganic compound BARRISURF HX | 0 | 10 | 0 |
| | Ethyl acetate | 50 | 50 | 50 |
| Curing agent | Polyisocyanate (TAKENATE 50 | 11.6 | 11.6 | 11.6 |
| | Polyisocyanate (TAKENATE D11 | 33.9 | 33.9 | 33.9 |
| | Ethyl acetate | 8.3 | 8.3 | 8.3 |
| Light-absorbing agent | SEESORB 106 | 5 | 5 | 0 |
| Ultraviolet transmission rate | (%) | 4.1 | 3.6 | 65 |

Abbreviations in the tables represent the following:

- BARRISURF HX: BARRISURF HX (manufactured by IMERYS, kaolin/non-swellable, nonionic between layers, plate shape, average particle size/1.5 μm, aspect ratio/about 100)
- ASP-400P: ASP-400P (manufactured by BASF, kaolin/non-swellable, nonionic between layers, plate shape, average particle size/4.8 μm)
- MICRO ACE K-1: MICRO ACE K-1 (manufactured by Nippon Talc Co., Ltd., talc:/non-swellable, nonionic between layers, plate shape, average particle size 8 μm)
- Cloisite Na+: Cloisite Na+ (manufactured by ROCKWOOD ADDITIVES LIMITED, montmorillonite/swellable, cationic between layers, plate shape, average particle size/6 μm)
- OPTIGEL CL: OPTIGEL CL (manufactured by ROCKWOOD ADDITIVES LIMITED, smectite/swellable, cationic between layers, plate shape, average particle size/1 μm, aspect ratio/500 to 1,000)
- PDM-5B: PDM-5B (manufactured by TOPY Industries Limited, mica/non-swellable, plate shape, average particle size 4.6 μm, aspect ratio/about 28)
- PDM-10BY: PDM-10BY (manufactured by TOPY Industries Limited, mica/non-swellable, plate shape, average particle size 12.8 μm, aspect ratio/about 40)
- NTS-5: NTS-5 (manufactured by TOPY Industries Limited, mica/swellable, plate shape, average particle size 11.4 μm, aqueous dispersion having non-volatile content of about 6%, aspect ratio/about 1,000) was dehydrated and then used.
- MEK-ST: MEK-ST (manufactured by Nissan Chemical Industries, Ltd., silica/non-swellable, spherical shape, average particle size 10 to 20 nm, MEK dispersion having non-volatile content of 30%, aspect ratio/Not determined because MEK-ST does not have a plate shape.)
- ST-100: ST filler ST-100 (manufactured by Shiraishi Calcium Kaisha, Ltd., calcined kaolin treated with aminosilane/non-swellable, plate shape, average particle size 3.5 μm)
- ST-301: ST filler ST-301 (manufactured by Shiraishi Calcium Kaisha, Ltd., hard clay treated with aminosilane/non-swellable, plate shape, average particle size 0.7 μm)
- LX-703VL: DIC DRY LX-703VL (manufactured by DIC Graphics Corporation: polyester polyol having aromatic skeleton), non-volatile content/about 62%
- LX-963: DIC DRY LX-963 (manufactured by DIC Graphics Corporation: polyester polyurethane polyol having aromatic skeleton), non-volatile content/about 50%
- LX-415A: DIC DRY LX-963 (manufactured by DIC Graphics Corporation: polyether polyurethane polyol having aromatic skeleton), non-volatile content/about 70%
- SP-75: SP-75 (manufactured by DIC Graphics Corporation, aromatic polyisocyanate), non-volatile content/about 75%
- D-110N: TAKENATE D-110N (manufactured by Mitsui Chemicals, Inc.: xylylene diisocyanate (XDI)-based polyisocyanate, non-volatile content/about 75%)

  TAKENATE 500: TAKENATE 500 (manufactured by Mitsui Chemicals, Inc.: XDI xylylene diisocyanate, non-volatile content/about 100%)

According to the above results, the laminates of adhesive resin compositions described in Examples 1 to 12, in which a non-swellable plate-like inorganic compound (C1) or a plate-like inorganic compound (C1) that was nonionic between layers was used, exhibited good adhesive strengths as compared with the laminates of adhesive resin compositions in which a plate-like inorganic compound (C1) that was nonionic between layers was not used.

In addition, according to the above results, oxygen-barrier laminated films obtained by using adhesives that contained the resin compositions for oxygen-barrier adhesive of Examples 1 to 8 exhibited high oxygen-barrier properties at 90% RH and had good adhesive strengths, as compared with the resin compositions for oxygen-barrier adhesives, the resin compositions not containing a non-swellable plate-like inorganic compound (C1) or a plate-like inorganic compound (C1) that was nonionic between layers. In contrast, some of the oxygen transmission rates in Comparative Examples 1 to 10 were relatively good, but were not at a sufficient level.

Furthermore, as is apparent from Examples 13 and 14, the resin compositions containing the light-blocking agent (C2) that can block light having a wavelength of 350 nm or less or the plate-like inorganic compound (C1) of the present invention have an effect of blocking light, in particular, ultraviolet light.

Industrial Applicability

The adhesive according to the present invention has a good adhesive strength, a good oxygen-barrier property, and a good light-blocking property. Therefore, the adhesive according to the present invention can be suitably used in any application that requires barrier properties and light-blocking properties not only as an adhesive for film lamination for packaging materials but also as, for example, an adhesive for electronic materials such as an adhesive for a solar cell protective film or an adhesive for a gas-barrier substrate for a display element, an adhesive for construction materials, and an adhesive for industrial materials.

## Claims

**1.** A resin composition for adhesives, the resin composition comprising (A) a resin that has, as functional groups, two or more hydroxyl groups per molecule, (B) an isocyanate compound that has, as functional groups, two or more isocyanate groups per molecule, and (C1) a plate-like inorganic compound that is non-swellable in water,
wherein a main skeleton of the resin (A) has a polyester or polyester polyurethane structure,
wherein a content of the plate-like inorganic compound (C1) is 5 to 50 parts by mass relative to 100 parts by mass of a total mass of the resin (A), the isocyanate compound (B), and the plate-like inorganic compound (C1); and wherein a ratio of an ortho-oriented aromatic dicarboxylic acid or an anhydride thereof to all polyvalent carboxylic acid components used as monomer components constituting a polyester is 70% to 100% by mass.

**2.** The resin composition for adhesives according to Claim 1, wherein the ortho-oriented aromatic dicarboxylic acid or the anhydride thereof is at least one selected from the group consisting of orthophthalic acid and an anhydride thereof, naphthalene-2,3-dicarboxylic acid and an anhydride thereof, naphthalene-1,2-dicarboxylic acid and an anhydride thereof, anthraquinone-2,3-dicarboxylic acid and an anhydride thereof, and 2,3-anthracene-dicarboxylic acid and an anhydride thereof.

**3.** The resin composition for adhesives according to Claim 1 or 2, wherein the isocyanate compound (B) contains a polyisocyanate having an aromatic ring.

**4.** The resin composition for adhesives according to Claim 3, wherein the polyisocyanate having an aromatic ring is meta-xylene diisocyanate or a reaction product between meta-xylene diisocyanate and an alcohol having two or more hydroxyl groups.

**5.** The resin composition for adhesives according to any one of Claims 1 to 4, wherein the plate-like inorganic compound (C1) contains a particle having an average particle size of 0.1 μm or more.

**6.** The resin composition for adhesives according to any one of Claims 1 to 5, wherein the resin (A) is dissolved in a ketone solvent, an ester solvent, or a mixed solvent containing a ketone solvent or an ester solvent.

**7.** The resin composition for adhesives according to any one of Claims 1 to 6, wherein the resin composition is a solvent-free form resin composition.

**8.** A resin composition for oxygen-barrier adhesives, the resin composition comprising the resin composition for adhesives according to any one of Claims 1 to 7, wherein the resin composition has an oxygen-barrier property.

**9.** The resin composition for oxygen-barrier adhesives according to Claim 8, obtained by using the resin (A) and the isocyanate compound (B) that provide a cured coating film having an oxygen transmission rate of 100 $cc/m^2\cdot day\cdot atm$ or less at 23°C and at a humidity of 90% when a coating amount of the cured coating film obtained from the resin (A) and the isocyanate compound (B) is about 5 $g/m^2$.

**10.** An adhesive obtained by curing the resin composition for adhesives according to any one of Claims 1 to 7.

**11.** An oxygen-barrier adhesive obtained by curing the resin composition for oxygen-barrier adhesives according to Claim 8 or 9.

**12.** Use of the adhesive according to Claim 10 or 11 as an adhesive for film lamination.

**13.** An inert-gas-barrier multilayer film comprising a layer constituted by the adhesive according to Claim 12.

**14.** An alcohol-gas-barrier multilayer film comprising a layer constituted by the adhesive according to Claim 12.

**15.** An aroma retention multilayer film comprising a layer constituted by the adhesive according to Claim 12.

## Patentansprüche

**1.** Harzzusammensetzung für Klebstoffe, wobei die Harzzusammensetzung umfasst:

(A) ein Harz, das als funktionelle Gruppen zwei oder mehr Hydroxylgruppen pro Molekül aufweist, (B) eine Isocyanatverbindung, die als funktionelle Gruppen zwei oder mehr Isocyanatgruppen pro Molekül aufweist und (C1) eine plättchenartige anorganische Verbindung, die in Wasser nicht quellbar ist,
wobei ein Hauptgerüst des Harzes (A) eine Polyester- oder Polyester-Polyurethan-Struktur aufweist,
wobei ein Gehalt der plättchenartigen anorganischen Verbindung (C1) 5 bis 50 Massenteile relativ zu 100 Massenteilen der Gesamtmasse aus dem Harz (A), der Isocyanatverbindung (B) und der plattenartigen anorganischen Verbindung (C1) beträgt; und worin
ein Verhältnis einer ortho-orientierten aromatischen Dicarbonsäure oder eines Anhydrids davon zu allen mehrwertigen Carbonsäurekomponenten, die als Monomerkomponenten, die einen Polyester bilden, verwendet werden, 70 bis 100 Masse-% beträgt.

**2.** Harzzusammensetzung für Klebstoffe nach Anspruch 1, wobei die ortho-orientierte aromatische Dicarbonsäure oder deren Anhydrid mindestens eine/s ist, ausgewählt aus der Gruppe, bestehend aus Orthophthalsäure und einem Anhydrid davon, Naphthalin-2,3-dicarbonsäure und einem Anhydrid davon, Naphthalin-1,2-dicarbonsäure und einem Anhydrid davon, Anthrachinon-2,3-dicarbonsäure und einem Anhydrid davon und 2,3-Anthracendicarbonsäure und einem Anhydrid davon.

**3.** Harzzusammensetzung für Klebstoffe nach Anspruch 1 oder 2, wobei die Isocyanatverbindung (B) ein Polyisocyanat mit einem aromatischen Ring enthält.

**4.** Harzzusammensetzung für Klebstoffe nach Anspruch 3, wobei das Polyisocyanat mit einem aromatischen Ring meta-Xyloldiisocyanat oder ein Reaktionsprodukt zwischen meta-Xyloldiisocyanat und einem Alkohol mit zwei oder mehr Hydroxylgruppen ist.

**5.** Harzzusammensetzung für Klebstoffe nach einem der Ansprüche 1 bis 4, wobei die plattenartige anorganische Verbindung (C1) ein Teilchen mit einer durchschnittlichen Teilchengröße von 0,1 $\mu m$ oder mehr enthält.

**6.** Harzzusammensetzung für Klebstoffe nach einem der Ansprüche 1 bis 5, wobei das Harz (A) in einem Ketonlösungsmittel, einem Esterlösungsmittel oder einem Lösungsmittelgemisch, das ein Ketonlösungsmittel oder ein Esterlösungsmittel enthält, gelöst ist.

**7.** Harzzusammensetzung für Klebstoffe nach einem der Ansprüche 1 bis 6, wobei die Harzzusammensetzung eine lösungsmittelfreie Harzzusammensetzung ist.

8. Harzzusammensetzung für Sauerstoff-Barriere-Klebstoffe, wobei die Harzzusammensetzung die Harzzusammensetzung für Klebstoffe nach einem der Ansprüche 1 bis 7 umfasst, wobei die Harzzusammensetzung eine Sauerstoff-Barriere-Eigenschaft aufweist.

9. Harzzusammensetzung für Sauerstoff-Barriere-Klebstoffe nach Anspruch 8, erhalten durch Verwendung des Harzes (A) und der Isocyanatverbindung (B), die einen gehärteten Überzugsfilm mit einer Sauerstoffdurchlässigkeitsrate von 100 cc/$m^2$ · Tag · atm oder weniger bei 23°C und bei einer Feuchtigkeit von 90%, wenn eine Beschichtungsmenge des gehärteten Beschichtungsfilms, erhalten aus dem Harz (A) und der Isocyanatverbindung (B), etwa 5 g/$m^2$ beträgt, bildet.

10. Klebstoff, erhalten durch Aushärten der Harzzusammensetzung für Klebstoffe nach einem der Ansprüche 1 bis 7.

11. Sauerstoff-Barriere-Klebstoff, erhalten durch Aushärten der Harzzusammensetzung für Sauerstoff-Barriere-Klebstoffe nach Anspruch 8 oder 9.

12. Verwendung des Klebstoffes nach Anspruch 10 oder 11 als Klebstoff zur Folienkaschierung.

13. Inerter Gas-Barriere-Mehrschichtfilm, umfassend eine Schicht, die aus dem Klebstoff nach Anspruch 12 besteht.

14. Alkohol-Gas-Barriere-Mehrschichtfilm, umfassend eine Schicht, die aus dem Klebstoff nach Anspruch 12 besteht.

15. Aroma-Retentions-Mehrschichtfolie, umfassend eine Schicht, die aus dem Klebstoff nach Anspruch 12 besteht.

## Revendications

1. Composition de résine pour adhésifs, la composition de résine comprenant (A) une résine qui comporte, en tant que groupes fonctionnels, deux groupes hydroxyles ou plus par molécule, (B) un composé isocyanate qui comporte, en tant que groupes fonctionnels, deux groupes isocyanate ou plus par molécule, et (C1) un composé inorganique en forme de plaque qui ne peut pas gonfler dans l'eau,
dans laquelle un squelette principal de la résine (A) présente une structure de polyester ou de polyester polyuréthane, dans laquelle une teneur du composé inorganique en forme de plaque (C1) est de 5 à 50 parties en masse par rapport à 100 parties en masse d'une masse totale de la résine (A), du composé isocyanate (B) et du composé inorganique en forme de plaque (C1) ; et dans laquelle
un rapport d'un acide dicarboxylique aromatique à orientation ortho ou d'un anhydride de celui-ci à tous les composants d'acide carboxylique polyvalent utilisés en tant que composants monomères constituant un polyester est de 70 % à 100 % en masse.

2. Composition de résine pour adhésifs selon la revendication 1, dans laquelle l'acide dicarboxylique aromatique à orientation ortho ou l'anhydride de celui-ci est au moins un choisi dans le groupe constitué de l'acide orthophtalique et d'un anhydride de celui-ci, de l'acide naphtalène-2,3-dicarboxylique et d'un anhydride de celui-ci, de l'acide naphtalène-1,2-dicarboxylique et d'un anhydride de celui-ci, de l'acide anthraquinone-2,3-dicarboxylique et d'un anhydride de celui-ci et de l'acide 2,3-anthracène-dicarboxylique et d'un anhydride de celui-ci.

3. Composition de résine pour adhésifs selon la revendication 1 ou 2, dans laquelle le composé isocyanate (B) contient un polyisocyanate comportant un noyau aromatique.

4. Composition de résine pour adhésifs selon la revendication 3, dans laquelle le polyisocyanate comportant un noyau aromatique est le diisocyanate de méta-xylène ou un produit réactionnel entre le diisocyanate de méta-xylène et un alcool comportant deux groupes hydroxyles ou plus.

5. Composition de résine pour adhésifs selon l'une quelconque des revendications 1 à 4, dans laquelle le composé inorganique en forme de plaque (C1) contient une particule ayant une taille moyenne de particule de 0,1 $\mu$m ou plus.

6. Composition de résine pour adhésifs selon l'une quelconque des revendications 1 à 5, dans laquelle la résine (A) est dissoute dans un solvant de cétone, un solvant d'ester ou un solvant mixte contenant un solvant de cétone ou un solvant d'ester.

**7.** Composition de résine pour adhésifs selon l'une quelconque des revendications 1 à 6, dans laquelle la composition de résine est une composition de résine sous une forme sans solvant.

**8.** Composition de résine pour adhésifs formant barrière à l'oxygène, la composition de résine comprenant la composition de résine pour adhésifs selon l'une quelconque des revendications 1 à 7, dans laquelle la composition de résine possède une propriété de barrière à l'oxygène.

**9.** Composition de résine pour adhésifs formant barrière à l'oxygène selon la revendication 8, obtenue en utilisant la résine (A) et le composé isocyanate (B) qui fournissent un film de revêtement durci ayant un taux de transmission de l'oxygène de 100 $cm^3/m^2$.jour.atm ou moins à 23 °C et à une humidité de 90 % lorsqu'une quantité de revêtement du film de revêtement durci obtenu à partir de la résine (A) et du composé isocyanate (B) est d'environ 5 $g/m^2$.

**10.** Adhésif obtenu par durcissement de la composition de résine pour adhésifs selon l'une quelconque des revendications 1 à 7.

**11.** Adhésif formant barrière à l'oxygène obtenu par durcissement de la composition de résine pour adhésifs formant barrière à l'oxygène selon la revendication 8 ou 9.

**12.** Utilisation de l'adhésif selon la revendication 10 ou 11 en tant qu'adhésif pour la stratification de film.

**13.** Film multicouche formant barrière aux gaz inertes comprenant une couche constituée de l'adhésif selon la revendication 12.

**14.** Film multicouche formant barrière à l'alcool gazeux comprenant une couche constituée de l'adhésif selon la revendication 12.

**15.** Film multicouche de rétention d'arôme comprenant une couche constituée de l'adhésif selon la revendication 12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000290631 A
- JP 4054972 B
- JP 3829526 B
- JP 3906095 B
- US 5527616 A
- JP 2003013032 A